# EUROPEAN PATENT APPLICATION

(11) **EP 4 796 914 A1**
(43) Date of publication of application: **26.08.2026**
(21) Application number: 26158285.2
(22) Date of filing: 12.02.2026
(51) Int. Cl.: G01N 15/1429

(54) **SYSTEMS FOR ANALYZING MULTIMODAL FLOW CYTOMETRY DATASET AND METHODS FOR USING SAME**

(30) Priority: 19.02.2025 US 202519057657
(71) Applicant: Becton, Dickinson and Company, Franklin Lakes, NJ 07417-1880 (US)
(72) Inventor: Bai, Wenyu, Franklin Lakes, 07417-1880 (US); Owsley, Keegan, Franklin Lakes, 07417-1880 (US); Lomas, Woodrow E., Franklin Lakes, 07417-1880 (US); Nguyen, Andy Thanh, Franklin Lakes, 07417-1880 (US); Shi, Xiaoshan, Franklin Lakes, 07417-1880 (US)
(74) Representative: Arnold & Siedsma

(57) **Abstract**

Aspects of the present disclosure include systems for classifying cells (e.g., single cells) of a sample in a flow stream such as from biological parameters determined from feature vectors. Systems according to the disclosure include a light source configured to irradiate cells of a sample in a flow stream, a light detection system having a photodetector to detect light from the irradiated cells and a processor having memory operably coupled to the processor where the memory includes instructions stored thereon, which when executed by the processor, cause the processor to receive two or more data sets, where each of the two or more data sets is associated with one of a plurality of data modes, apply an algorithm to convert each of the two or more data sets into a feature vector based on the associated data mode, receive a classification task regarding the two or more data sets and apply one or more of a plurality of classification models to the feature vector based on the received classification task to determine a class. Methods for using the subject systems are also described. Non-transitory computer readable storage media are also provided.

## Description

### INTRODUCTION

Flow-type particle sorting systems, such as sorting flow cytometers, are used to sort particles in a fluid sample based on at least one measured characteristic of the particles. In a flow-type particle sorting system, particles, such as analyte-bound beads or individual cells in a fluid suspension are passed in a stream by a detection region in which a sensor detects particles contained in the stream of the type to be sorted. The sensor, upon detecting a particle of the type to be sorted, triggers a sorting mechanism that selectively isolates the particle of interest.

Particle sensing typically is carried out by passing the fluid stream by a detection region in which the particles are exposed to irradiating light, from one or more lasers, and fluorescence from the particles is measured. Particles or components thereof can be labeled with fluorescent dyes to facilitate detection, and a multiplicity of different particles or components may be simultaneously detected by using spectrally distinct fluorescent dyes to label the different particles or components. Detection is carried out using one or more photosensors to facilitate the independent measurement of the fluorescence of each distinct fluorescent dye.

Using data generated from the detected light, distributions of the components can be recorded and where desired material may be sorted. To sort particles in the sample, a drop charging mechanism charges droplets of the flow stream containing a particle type to be sorted with an electrical charge at the break-off point of the flow stream. Droplets are passed through an electrostatic field and are deflected based on polarity and magnitude of charge on the droplet into one or more collection containers. Uncharged droplets are not deflected by the electrostatic field.

Extracting biological insights from flow cytometry data is challenging due to the heterogeneity of data types, large data volumes and lack of generalizable algorithms accessible to biologists.

### SUMMARY

The inventors have realized that high-throughput phenotypic cellular analysis of high-parameter, large volume heterogeneous data provided through label-free and fluorescence imaging are needed. The inventors have further discovered that extensible architecture on neural networks can be used for image-based cell phenotyping and integrate imaging with spectral analysis.

Aspects of the present disclosure include systems for classifying cells (e.g., single cells) of a sample in a flow stream. Systems according to the disclosure include a light source configured to irradiate cells of a sample in a flow stream, a light detection system having a photodetector to detect light from the irradiated cells and a processor having memory operably coupled to the processor where the memory includes instructions stored thereon, which when executed by the processor, cause the processor to receive two or more data sets, where each of the two or more data sets is associated with one of a plurality of data modes, apply an algorithm to convert each of the two or more data sets into a feature vector based on the associated data mode, receive a classification task regarding the two or more data sets and apply one or more of a plurality of classification models to the feature vector based on the received classification task to determine a class.

The plurality of data modes may include an image data mode. The algorithm may be a rule-based image processing algorithm. The algorithm may include a neural network. The memory may include instructions to invert a lightloss channel of the data set associated with the image data mode, scale a pixel value of each channel of the data set associated with the image data mode to a zero mean, scale a pixel value of each channel of the data set associated with the image data mode to a unit standard deviation or a combination thereof. The plurality of data modes may include a waveform data mode. The algorithm may include a sequence learning machine model. The plurality of data modes may include a spectral data mode. The algorithm may include a compensation model, a spectral unmixing model or a combination thereof. The plurality of data modes may include a scattering data mode. The algorithm may include a calibration model.

The classification task may include a singlets classification task, a viability classification task, a whole blood classification task, a T-cell activation classification task, or any combination thereof. The classification task may be a singlets classification task and the class includes a singlets class, an attached doublets class, a separated doublets class, a triplets class, or a debris class. The classification task may include a viability classification task and the class includes a live class, a dead class, or an apoptotic class. The classification task may include a whole blood classification task and the whole blood classification includes a granulocyte class, a monocyte class, or a lymphocyte class. The classification task may include a T-cell activation classification task and the class includes an activated class, or a non-activated class.

The plurality of classification models may include an end-to-end model. The end-to-end model may include a Uniform Manifold Approximation and Projection (UMAP) model, a T-distributed Stochastic Neighbor Embedding (TSNE) model, a Principal Component Analysis (PCA) model, or any combination thereof. The plurality of classification models may be trained by a supervised method. The plurality of classification models may be trained by a weight cross-entropy loss function.

, The light source may be configured to irradiate the sample with frequency-modulated beams of light. The light source may include one or more lasers. The light detection system may include a plurality of photodetectors. One or more of the photodetectors may be a photomultiplier tube. One or more of the photodetectors may be a photodiode (e.g., an avalanche photodiode, APD). The light detection system may include a photodetector array, such as a photodetector array having a plurality of photodiodes or charged coupled devices (CCDs).

Systems may include a sorting mechanism for sorting cells of the sample into a plurality of sample containers. The sorting mechanism is configured to sort cells based on the presence, the classification, or both, of the cell. The memory may include instructions for sorting cells based on the generated images of the cells and spectral data from the cells. The memory may include instructions for sorting cells based on calculated image parameters.

The present disclosure also includes a method for classifying cells (e.g., single cells) of a sample in a flow stream, such as based on biological parameters of a cell determined from feature vectors. The method may include receiving two or more data sets, where each of the two or more data sets is associated with one of a plurality of data modes, applying an algorithm to convert each of the two or more data sets into a feature vector based on the associated data mode, receiving a classification task regarding the two or more data sets and applying one or more of a plurality of classification models to the feature vector based on the received classification task to determine a class. The method may further include irradiating with a light source a sample having cells in a flow stream and measuring light with a light detection system having a photodetector from the irradiated cells.

The plurality of data modes may include an image data mode. The algorithm may be a rule-based image processing algorithm. The algorithm may include a neural network. The memory may include instructions to invert a lightloss channel of the data set associated with the image data mode, scale a pixel value of each channel of the data set associated with the image data mode to a zero mean, scale a pixel value of each channel of the data set associated with the image data mode to a unit standard deviation or a combination thereof. The plurality of data modes may include a waveform data mode. The algorithm may include a sequence learning machine model. The plurality of data modes may include a spectral data mode. The algorithm may include a compensation model, a spectral unmixing model or a combination thereof. The plurality of data modes may include a scattering data mode. The algorithm may include a calibration model.

The classification task may include a singlets classification task, a viability classification task, a whole blood classification task, a T-cell activation classification task, or any combination thereof. The classification task may be a singlets classification task and the class may include a singlets class, an attached doublets class, a separated doublets class, a triplets class, or a debris class. The classification task may include a viability classification task and the class may include a live class, a dead class, or an apoptotic class. The classification task may include a whole blood classification task and the whole blood classification may include a granulocyte class, a monocyte class, or a lymphocyte class. The classification task may include a T-cell activation classification task and the class may include an activated class, or a non-activated class.

The plurality of classification models may include an end-to-end model. The end-to-end model may include a Uniform Manifold Approximation and Projection (UMAP) model, a T-distributed Stochastic Neighbor Embedding (TSNE) model, a Principal Component Analysis (PCA) model, or any combination thereof. The plurality of classification models may be trained by a supervised method. The plurality of classification models may be trained by a weight cross-entropy loss function.

The method may include determining one or more sorting gates of the classified cells of the sample. The method may include calculating one or more sorting gates that capture population clusters of target cells and exclude population clusters of non-target cells. The method may include calculating sorting gates that maximize the inclusion yield of the population clusters of the target cells. The method may include calculating sorting gates that maximize the exclusion of population clusters of non-target cells.

Non-transitory computer readable storage medium having instructions with algorithm are also provided. Non-transitory computer readable storage medium the disclosure may have algorithm for receiving two or more data sets, where each of the two or more data sets is associated with one of a plurality of data modes, algorithm for applying an algorithm to convert each of the two or more data sets into a feature vector based on the associated data mode, algorithm for receiving a classification task regarding the two or more data sets and algorithm for applying one or more of a plurality of classification models to the feature vector based on the received classification task to determine a class. The non-transitory computer readable storage medium may include algorithm for irradiating with a light source a sample having cells in a flow stream and algorithm for measuring light with a light detection system having a photodetector from the irradiated cells.

The plurality of data modes may include an image data mode. The algorithm may be a rule-based image processing algorithm. The algorithm may include a neural network. The memory may include instructions to invert a lightloss channel of the data set associated with the image data mode, scale a pixel value of each channel of the data set associated with the image data mode to a zero mean, scale a pixel value of each channel of the data set associated with the image data mode to a unit standard deviation or a combination thereof. The plurality of data modes may include a waveform data mode. The algorithm may include a sequence learning machine model. The plurality of data modes may include a spectral data mode. The algorithm may include a compensation model, a spectral unmixing model or a combination thereof. The plurality of data modes may include a scattering data mode. The algorithm may include a calibration model.

The classification task may include a singlets classification task, a viability classification task, a whole blood classification task, a T-cell activation classification task, or any combination thereof. The classification task may be a singlets classification task and the class may include a singlets class, an attached doublets class, a separated doublets class, a triplets class, or a debris class. The classification task may include a viability classification task and the class includes a live class, a dead class, or an apoptotic class. The classification task may include a whole blood classification task and the whole blood classification includes a granulocyte class, a monocyte class, or a lymphocyte class. The classification task may include a T-cell activation classification task and the class includes an activated class, or a non-activated class.

The plurality of classification models may include an end-to-end model. The end-to-end model may include a Uniform Manifold Approximation and Projection (UMAP) model, a T-distributed Stochastic Neighbor Embedding (TSNE) model, a Principal Component Analysis (PCA) model, or any combination thereof. The plurality of classification models may be trained by a supervised method. The plurality of classification models may be trained by a weight cross-entropy loss function.

The non-transitory computer readable storage medium may include algorithm for determining one or more sorting gates of the classified cells of the sample. The non-transitory computer readable storage medium may include algorithm for calculating one or more sorting gates that capture population clusters of target cells and exclude population clusters of non-target cells. The non-transitory computer readable storage medium may include algorithm for calculating sorting gates that maximize the inclusion yield of the population clusters of the target cells. The non-transitory computer readable storage medium may include algorithm for calculating sorting gates that maximize the exclusion of population clusters of non-target cells.

The non-transitory computer readable storage medium may include algorithm for sorting cells of the sample into a plurality of sample containers. The non-transitory computer readable storage medium may include algorithm for sorting cells based on the presence, the classification, or both, of the cell. The non-transitory computer readable storage medium may include algorithm for sorting cells based on the generated images of the cells. The non-transitory computer readable storage medium may include algorithm.

The disclosure also includes the following clauses:
1. A system comprising:
   a light source configured to irradiate cells of a sample in a flow stream;
   a light detection system comprising a photodetector to detect light from the irradiated cells;
   a processor comprising memory operably coupled to the processor
   wherein the memory comprises instructions stored thereon, which when executed by the processor, cause the processor to:
   receive two or more data sets, wherein each of the two or more data sets is associated with one of a plurality of data modes;
   apply an algorithm to convert each of the two or more data sets into a feature vector based on the associated data mode;
   receive a classification task regarding the two or more data sets; and
   apply one or more of a plurality of classification models to the feature vector based on the received classification task to determine a class.
2. The system according to clause 1, wherein the plurality of data modes comprises an image data mode.
3. The system according to any one of clauses 1-2, wherein the algorithm comprises a rule-based image processing algorithm.
4. The system according to any one of clauses 1-3, wherein the algorithm comprises neural network.
5. The system according to any one of clauses 2-4, wherein the memory comprises instructions to:
   invert a lightloss channel of the data set associated with the image data mode;
   scale a pixel value of each channel of the data set associated with the image data mode to a zero mean;
   scale a pixel value of each channel of the data set associated with the image data mode to a unit standard deviation; or
   a combination thereof.
6. The system according to any one of clauses 1-5, wherein the plurality of data modes comprises a waveform data mode.
7. The system according to any one of clauses 1-6, wherein the algorithm comprises a sequence learning machine model.
8. The system according to any one of clauses 1-7, wherein the plurality of data modes comprises a spectral data mode.
9. The system according to clause 8, wherein the algorithm comprises a compensation model, a spectral unmixing model, or both.
10. The system according to any one of clauses 1-9, wherein the plurality of data modes comprises a scattering data mode.
11. The system according to any one of clauses 1-10, wherein the algorithm comprises a calibration model.
12. The system according to any one of clauses 1-11, wherein the classification task comprises a singlets classification task, a viability classification task, a whole blood classification task, a T-cell activation classification task, or any combination thereof.
13. The system according to clause 12, wherein the classification task comprises the singlets classification task and wherein the class comprises a singlets class, an attached doublets class, a separated doublets class, a triplets class, or a debris class.
14. The system according to clause 12, wherein the classification task comprises the viability classification task and wherein the class comprises a live class, a dead class, or an apoptotic class.
15. The system according to clause 12, wherein the classification task comprises the whole blood classification task and wherein the class comprises a granulocyte class, a monocyte class, or a lymphocyte class.
16. The system according to clause 12, wherein the classification task comprises the T-cell activation classification task and wherein the class comprises an activated class, or a non-activated class.
17. The system according to any one of clauses 1-16, wherein the plurality of classification models comprises an end-to-end model.
18. The system according to clause 17, wherein the end-to-end model comprises a gating hierarchy, a single layer classifier, a multi-layer classifier, a random forest classifier, a support vector machine classifier, or any combination thereof.
19. The system according to any one of clauses 1-16, wherein the plurality of classification models comprises an exploratory model.
20. The system according to clause 19, wherein the exploratory model comprises a Uniform Manifold Approximation and Projection (UMAP) model, a T-distributed Stochastic Neighbor Embedding (TSNE) model, a Principal Component Analysis (PCA) model, or any combination thereof.
21. The system according to any one of clauses 1-20, wherein one or more of the plurality of classification models is trained by a supervised method.
22. The system according to any one of clause 1-21, wherein one or more of the plurality of classification models is trained by a weighted cross-entropy loss function.
23. A method comprising:
   receiving two or more data sets, wherein each of the two or more data sets is associated with one of a plurality of data modes;
   applying an algorithm to convert each of the two or more data sets into a feature vector based on the associated data mode;
   receiving a classification task regarding the two or more data sets; and
   applying one or more of a plurality of classification models to the feature vector based on the received classification task to determine a class.
24. The method according to clause 23, wherein the plurality of data modes comprises an image data mode.
25. The method according to any one of clauses 23-24, wherein the algorithm comprises a rule-based image processing algorithm.
26. The method according any one of clauses 23-25, wherein the algorithm comprises neural network.
27. The method according to any one of clauses 24-26, further comprising:
   inverting a lightloss channel of the data set associated with the image data mode;
   scaling a pixel value of each channel of the data set associated with the image data mode to a zero mean;
   scaling a pixel value of each channel of the data set associated with the image data mode to a unit standard deviation; or
   any combination thereof.
28. The method according to any one of clauses 23-27, wherein the plurality of data modes comprises a waveform data mode.
29. The method according to any one of clauses 23-28, wherein the algorithm comprises a sequence learning machine model.
30. The method according to any one of clauses 23-29, wherein the plurality of data modes comprises a spectral data mode.
31. The method according to clause 30, wherein the algorithm comprises a compensation model, a spectral unmixing model, or both.
32. The method according to any one of clauses 23-31, wherein the plurality of data modes comprises a scattering data mode.
33. The method according to any one of clauses 23-32, wherein the algorithm comprises a calibration model.
34. The method according to any one of clauses 23-33, wherein the classification task comprises a singlets classification task, a viability classification task, a whole blood classification task, a T-cell activation classification task, or any combination thereof.
35. The method according to clause 34, wherein the classification task comprises the singlets classification task and wherein the class comprises a singlets class, an attached doublets class, a separated doublets class, a triplets class, or a debris class.
36. The method according to clause 34, wherein the classification task comprises the viability classification task and wherein the class comprises a live class, a dead class, or an apoptotic class.
37. The method according to clause 34, wherein the classification task comprises the whole blood classification task and wherein the class comprises a granulocyte class, a monocyte class, or a lymphocyte class.
38. The method according to clause 34, wherein the classification task comprises the T-cell activation classification task and wherein the class comprises an activated class, or a non-activated class.
39. The method according to any one of clauses 23-38, wherein the plurality of classification models comprises an end-to-end model.
40. The method according to clause 39, wherein the end-to-end model comprises a gating hierarchy, a single layer classifier, a multi-layer classifier, a random forest classifier, a support vector machine classifier, or any combination thereof.
41. The method according to any one of clauses 23-38, wherein the plurality of classification models comprises an exploratory model.
42. The method according to clause 41, wherein the exploratory model comprises a Uniform Manifold Approximation and Projection (UMAP) model, a T-distributed Stochastic Neighbor Embedding (TSNE) model, a Principal Component Analysis (PCA) model, or any combination thereof.
43. The method according to any one of clauses 23-42, wherein one or more of the plurality of classification models is trained by a supervised method.
44. The method according to any one of clauses 23-43, wherein one or more of the plurality of classification models is trained by a weighted cross-entropy loss function.
45. A non-transitory computer readable storage medium comprising instructions stored thereon wherein the non-transitory computer readable storage medium comprises:
   algorithm for receiving two or more data sets, wherein each of the two or more data sets is associated with one of a plurality of data modes;
   algorithm for applying an algorithm to convert each of the two or more data sets into a feature vector based on the associated data mode;
   algorithm for receiving a classification task regarding the two or more data sets; and
   algorithm for applying one or more of a plurality of classification models to the feature vector based on the received classification task to determine a class.
46. The non-transitory computer readable storage medium according to clause 45, wherein the plurality of data modes comprises an image data mode.
47. The non-transitory computer readable storage medium according to any one of clauses 45-46, wherein the algorithm comprises a rule-based image processing algorithm.
48. The non-transitory computer readable storage medium according to any one of clauses 45-47, wherein the algorithm comprises neural network.
49. The non-transitory computer readable storage medium according to any one of clauses 46-48, wherein the memory comprises instructions to:
   invert a lightloss channel of the data set associated with the image data mode;
   scale a pixel value of each channel of the data set associated with the image data mode to a zero mean;
   scale a pixel value of each channel of the data set associated with the image data mode to a unit standard deviation; or
   a combination thereof.
50. The non-transitory computer readable storage medium according to any one of clauses 45-49, wherein the plurality of data modes comprises a waveform data mode.
51. The non-transitory computer readable storage medium according to any one of clauses 45-50, wherein the algorithm comprises a sequence learning machine model.
52. The system according to any one of clauses 1-7, wherein the plurality of data modes comprises a spectral data mode.
53. The non-transitory computer readable storage medium according to clause 52, wherein the algorithm comprises a compensation model, a spectral unmixing model, or both.
54. The non-transitory computer readable storage medium according to any one of clauses 45-53, wherein the plurality of data modes comprises a scattering data mode.
55. The non-transitory computer readable storage medium according to any one of clauses 45-54, wherein the algorithm comprises a calibration model.
56. The non-transitory computer readable storage medium according to any one of clauses 45-55, wherein the classification task comprises a singlets classification task, a viability classification task, a whole blood classification task, a T-cell activation classification task, or any combination thereof.
57. The non-transitory computer readable storage medium according to clause 56, wherein the classification task comprises the singlets classification task and wherein the class comprises a singlets class, an attached doublets class, a separated doublets class, a triplets class, or a debris class.
58. The non-transitory computer readable storage medium according to clause 56, wherein the classification task comprises the viability classification task and wherein the class comprises a live class, a dead class, or an apoptotic class.
59. The non-transitory computer readable storage medium according to clause 56, wherein the classification task comprises the whole blood classification task and wherein the class comprises a granulocyte class, a monocyte class, or a lymphocyte class.
60. The non-transitory computer readable storage medium according to clause 56, wherein the classification task comprises the T-cell activation classification task and wherein the class comprises an activated class, or a non-activated class.
61. The non-transitory computer readable storage medium according to any one of clauses 56-60, wherein the plurality of classification models comprises an end-to-end model.
62. The non-transitory computer readable storage medium according to clause 61, wherein the end-to-end model comprises a gating hierarchy, a single layer classifier, a multi-layer classifier, a random forest classifier, a support vector machine classifier, or any combination thereof.
63. The non-transitory computer readable storage medium according to any one of clauses 45-60, wherein the plurality of classification models comprises an exploratory model.
64. The non-transitory computer readable storage medium according to clause 63, wherein the exploratory model comprises a Uniform Manifold Approximation and Projection (UMAP) model, a T-distributed Stochastic Neighbor Embedding (TSNE) model, a Principal Component Analysis (PCA) model, or any combination thereof.
65. The non-transitory computer readable storage medium according to any one of clauses 45-64, wherein one or more of the plurality of classification models is trained by a supervised method.
66. The non-transitory computer readable storage medium according to any one of clause 45-65, wherein one or more of the plurality of classification models is trained by a weighted cross-entropy loss function.

### BRIEF DESCRIPTION OF THE FIGURES

The invention may be best understood from the following detailed description when read in conjunction with the accompanying drawings. Included in the drawings are the following figures:

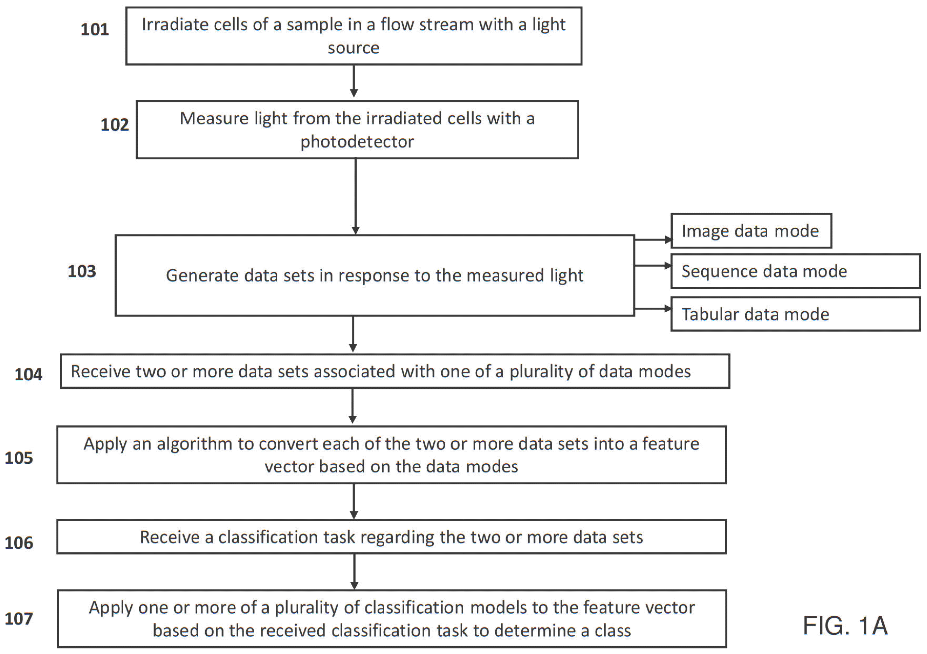

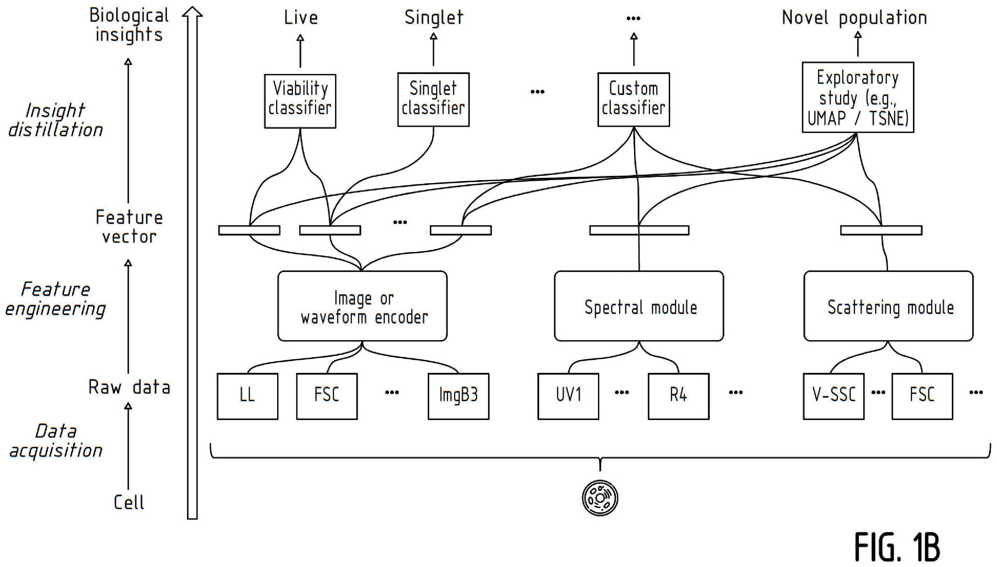

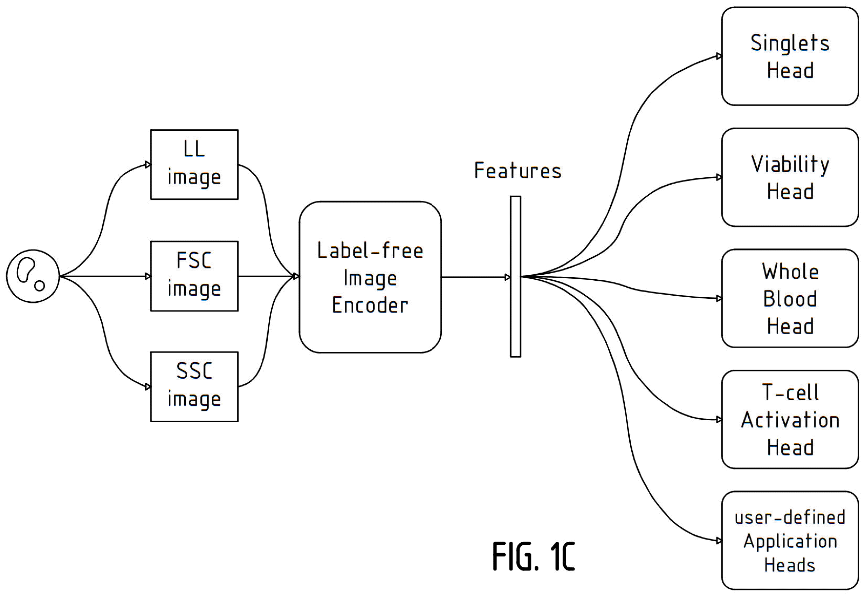

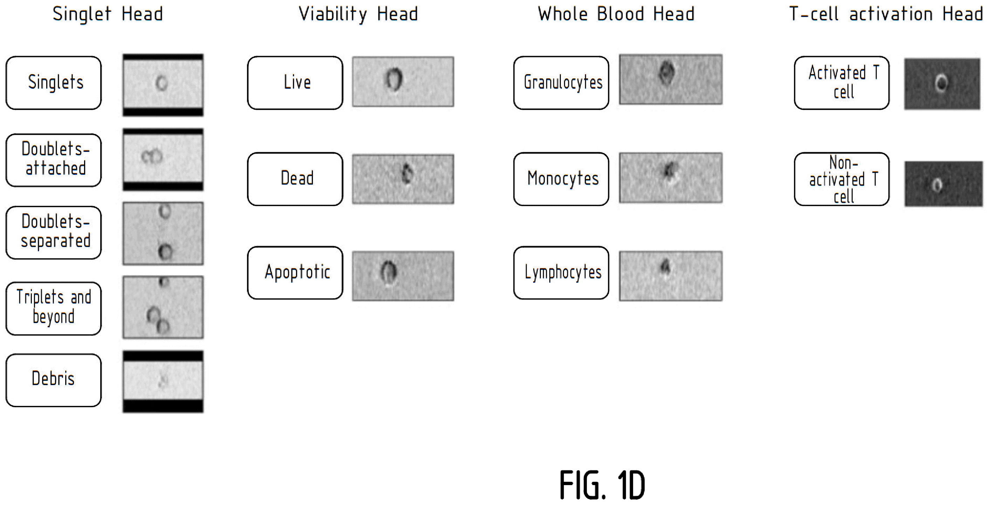

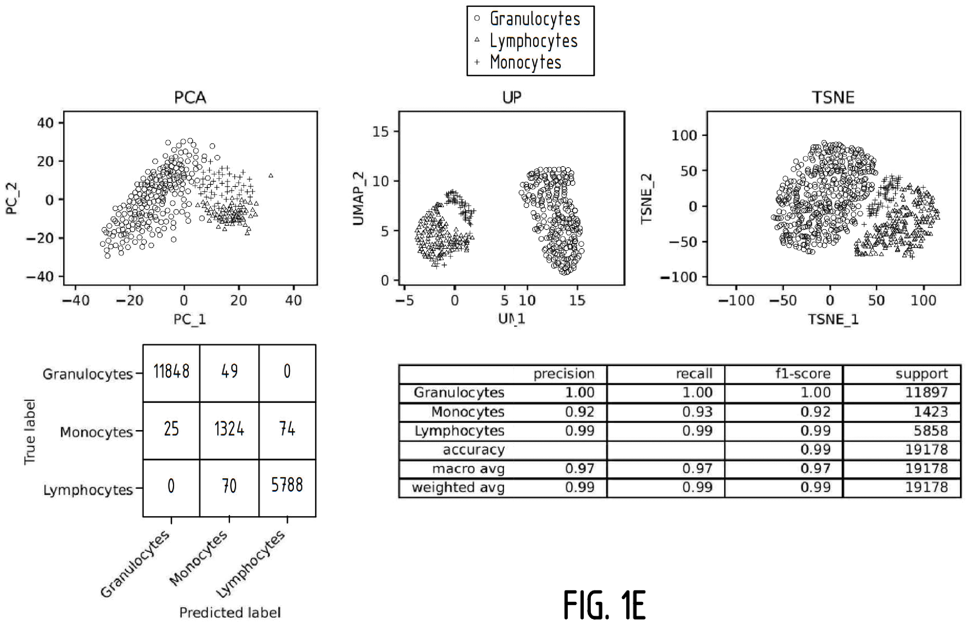

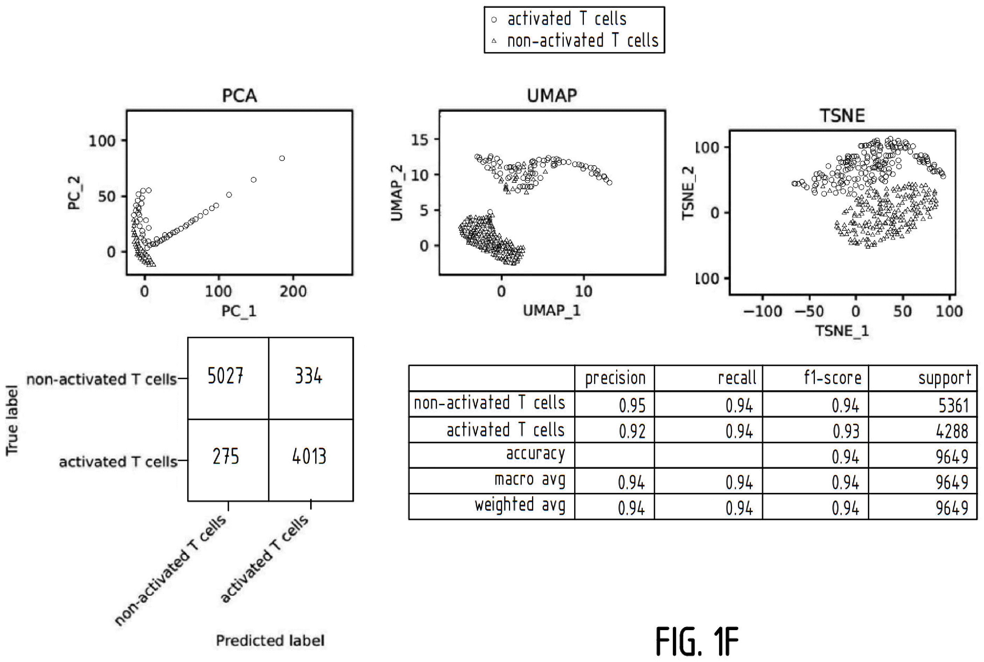

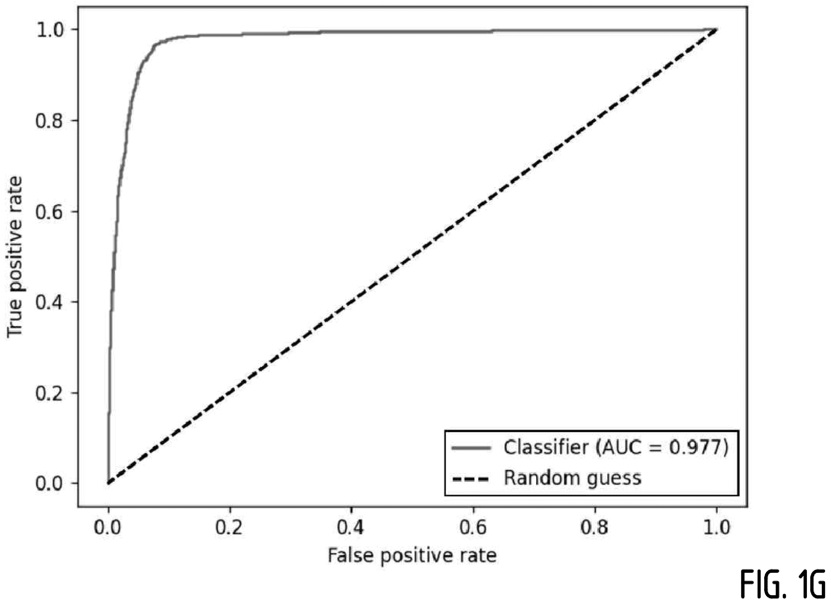

**FIG. 1A** depicts a flow chart for classifying cells of a sample based on feature vectors according to the disclosure. **FIG. 1B** depicts an analysis workflow that integrates image, spectral and scattering information from measured single cells according to the disclosure. **FIG. 1C** illustrates an example of a label-free image encoder according to the disclosure. **FIG. 1D** depicts light loss images for different cell classifications according to the disclosure. **FIG. 1E** depicts an example performance of classifiers in whole blood classification according to the disclosure. **FIG. 1F** depicts an example performance of classifiers in T-cell activation determination according to the disclosure. **FIG. 1G** shows a receiver operating characteristic curve for the T-cell activation dataset according to the disclosure.
**FIG. 2** presents a flow cytometric system according to the disclosure.
**FIG. 3A** depicts an image-enabled particle sorter according to the disclosure. **FIG. 3B** depicts image-enabled particle sorting data processing according to the disclosure.
**FIG. 4A** depicts a functional block diagram of a particle analysis system according to the disclosure. **FIG. 4B** depicts a flow cytometer according to the disclosure.
**FIG. 5** depicts a functional block diagram for one example of a control system according to the disclosure.
**FIG. 6A** depicts a schematic drawing of a particle sorter system according to the disclosure. **FIG. 6B** depicts a schematic drawing of a particle sorter system according to the disclosure.

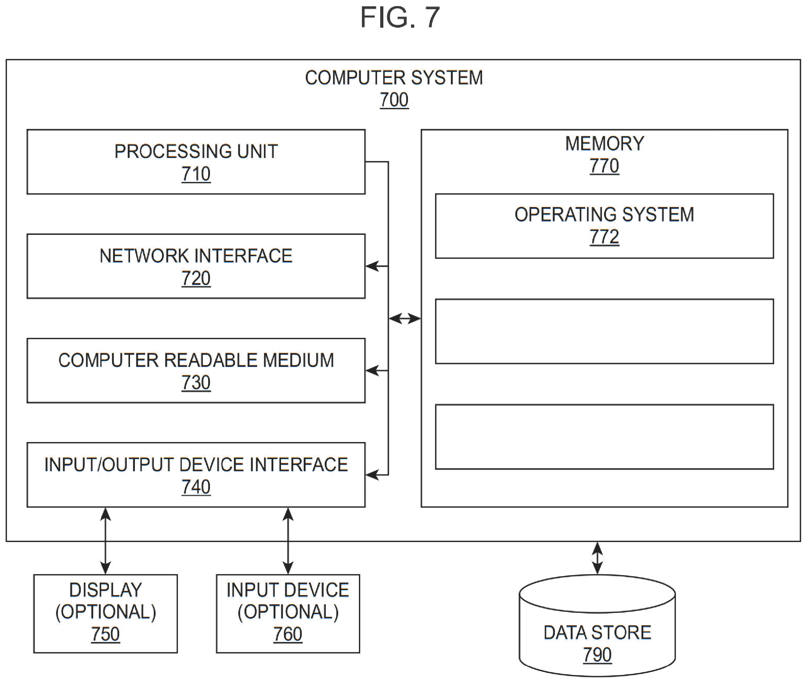

**FIG. 7** depicts a block diagram of a computing system according to the disclosure.

### DETAILED DESCRIPTION

Aspects of the present disclosure include a system for classifying cells (e.g., single cells) of a sample in a flow stream such as from biological parameters determined from feature vectors. A systems according to the disclosure may include a light source configured to irradiate cells of a sample in a flow stream, a light detection system having a photodetector to detect light from the irradiated cells and a processor having memory operably coupled to the processor where the memory includes instructions stored thereon, which when executed by the processor, cause the processor to receive two or more data sets, where each of the two or more data sets is associated with one of a plurality of data modes, apply an algorithm to convert each of the two or more data sets into a feature vector based on the associated data mode, receive a classification task regarding the two or more data sets and apply one or more of a plurality of classification models to the feature vector based on the received classification task to determine a class. Methods for using the subject systems are also described. Non-transitory computer readable storage media are also provided.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention.

Certain ranges are presented herein with numerical values being preceded by the term "about". The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

While the apparatus and method has or will be described for the sake of grammatical fluidity with functional explanations, are not to be construed as necessarily limited in any way by the construction of "mean" or "step" limitations, but are to be accorded the full scope of the meaning and equivalents of the definition provided by the claims under the judicial doctrine of equivalents.

### SYSTEMS FOR CLASSIFYING SINGLE CELLS IN A SAMPLE IN A FLOW STREAM

As summarized above, aspects of the present disclosure include a system for classifying cells (e.g., single cells) of a sample in a flow stream such as from biological parameters determined from feature vectors. The system may provide an extensible architecture based on neural networks to automate image-based cell phenotyping and integrate image with spectral analysis. The ability of the method and system herein to receive image data, waveform data, spectral data, and scattering data enables the inclusion of various forms of data from different sources. The system and method may provide for a workflow for flow cytometric analysis that integrates multi-modal datasets such as image data, waveform data, spectral data, and scattering data measured from single cells and for implementing an image encoder. The application of a neural network as described herein provides for extracting biological insights of single cells in a flow stream from a multitude of heterogenous data sets including imaging datasets which allow for generalizable algorithms to generate insightful biological data. The biological data may be sufficient to determine whether further downstream biological sampling or assay is desired.

The system may be configured to generate feature vectors which can be used to classify the cells based on physical and human-interpretable properties. The system may provide a high-throughput and robust protocol for generating phenotypic analysis of single cells from image data, sequence data (e.g., raw data waveforms) and tabular data (e.g., spectral and scattering light data that can be raw or unmixed) that provide for assessing the type of cells as well as morphological characteristics of the cells in the sample. The system may be configured for classifying (and sorting, as described below) rare cells in the sample. The system may provide for identifying cells in the sample.

The system can increase the precision in classifying cells of a sample by 5% or more, such as by 10% or more, such as by 15% or more, such as by 25% or more, such as by 50% or more, such as by 75% or more and including by 99% or more. The classified cells of the sample can be sorted or can be prepared such as where 50% or more of the cells in the sample are suitable for use in a downstream biological assay, such as 60% or more, such as 70% or more, such as 80% or more, such as 90% or more, such as 95% or more, such as 97% or more and including 99% or more.

The sample irradiated in the flow stream may be a biological sample. A "biological sample" can refer to a whole organism, plant, fungi or a subset of animal tissues, cells or component parts which may be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In the disclosure, the biological sample may be a liquid sample, such as blood or derivative thereof, e.g., plasma, tears, urine, semen, etc., where the sample may be a blood sample, including whole blood, such as blood obtained from venipuncture or fingerstick (where the blood may or may not be combined with any reagents prior to assay, such as preservatives, anticoagulants, etc.). The sample may be a whole blood sample.

In the disclosure the source of the sample is a "mammal" or "mammalian", where these terms are used broadly to describe organisms which are within the class mammalia, including the orders carnivore (e.g., dogs and cats), rodentia (e.g., mice, guinea pigs, and rats), and primates (e.g., humans, chimpanzees, and monkeys). The subjects may be humans. The methods may be applied to samples obtained from human subjects of both genders and at any stage of development (i.e., neonates, infant, juvenile, adolescent, adult), where in the disclosure the human subject is a juvenile, adolescent or adult. While the present invention may be applied to samples from a human subject, it is to be understood that the methods may also be carried-out on samples from other animal subjects (that is, in "non-human subjects") such as, but not limited to, birds, mice, rats, dogs, cats, livestock and horses.

The subject system and method may be configured for phenotypic analysis and determining biological parameters for single cells in the sample. The term single cell is used herein its conventional sense to refer to the characterization of the cells of the sample at the level of an individual cell. As such, the data generated herein may be from each individual cell in the sample and is not an average or statistical derivative of a bulk population of cells. Image data may be generated for each individual cell in the sample. Spectral data for predetermined wavelengths of light may be generated from each individual cell in the sample. Scattering data may be generated for each individual cell in the sample. Raw detector waveforms may be generated for each individual cell in the sample.

The method may include irradiating cells of a sample in a flow stream with a light source. The light source may be any suitable broadband or narrow band source of light. Depending on the components in the sample, the light source may be configured to emit wavelengths of light that vary, ranging from 200 nm to 1500 nm, such as from 250 nm to 1250 nm, such as from 300 nm to 1000 nm, such as from 350 nm to 900 nm and including from 400 nm to 800 nm. For example, the light source may include a broadband light source emitting light having wavelengths from 200 nm to 900 nm. The light source may include a narrow band light source emitting a wavelength ranging from 200 nm to 900 nm. For example, the light source may be a narrow band LED (1 nm - 25 nm) emitting light having a wavelength ranging between 200 nm to 900 nm. In the disclosure, the light source is a laser. The subject system may include a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. The subject system may include a dye laser, such as a stilbene, coumarin or rhodamine laser. Lasers of interest may include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereofThe subject system may include a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The light source may be a non-laser light source, such as a lamp, including but not limited to a halogen lamp, deuterium arc lamp, xenon arc lamp, a light-emitting diode, such as a broadband LED with continuous spectrum, superluminescent emitting diode, semiconductor light emitting diode, wide spectrum LED white light source, an multi-LED integrated. The non-laser light source may be a stabilized fiber-coupled broadband light source, white light source, among other light sources or any combination thereof.

The light source may be positioned any suitable distance from the sample (e.g., the flow stream in a flow cytometer), such as at a distance of 0.001 mm or more from the flow stream, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source irradiate the sample at any suitable angle (e.g., relative the vertical axis of the flow stream), such as at an angle ranging from 10° to 90°, such as from 15° to 85°, such as from 20° to 80°, such as from 25° to 75° and including from 30° to 60°, for example at a 90° angle.

The light source may be configured to irradiate the sample continuously or in discrete intervals. The system may include a light source that is configured to irradiate the sample continuously, such as with a continuous wave laser that continuously irradiates the flow stream at the interrogation point in a flow cytometer. The system may include a light source that is configured to irradiate the sample at discrete intervals, such as every 0.001 milliseconds, every 0.01 milliseconds, every 0.1 milliseconds, every 1 millisecond, every 10 milliseconds, every 100 milliseconds and including every 1000 milliseconds, or some other interval. Where the light source is configured to irradiate the sample at discrete intervals, systems may include one or more additional components to provide for intermittent irradiation of the sample with the light source. For example, the subject system may include one or more laser beam choppers, manually or computer controlled beam stops for blocking and exposing the sample to the light source.

The light source may be a laser. Lasers of interest may include pulsed lasers or continuous wave lasers. For example, the laser may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof; a semiconductor diode laser, optically pumped semiconductor laser (OPSL), or a frequency doubled- or frequency tripled implementation of any of the above mentioned lasers.

The light source may be a light beam generator that is configured to generate two or more beams of frequency shifted light. The light beam generator may include a laser, a radiofrequency generator configured to apply radiofrequency drive signals to an acousto-optic device to generate two or more angularly deflected laser beamsThe laser may be a pulsed lasers or continuous wave laser. For example lasers in light beam generators of interest may be a gas laser, such as a helium-neon laser, argon laser, krypton laser, xenon laser, nitrogen laser, CO2 laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO₄ laser, Nd:yCa4O(BO₃)₃ laser, Nd:YCOB laser, titanium sapphire laser, thulim YAG laser, ytterbium YAG laser, ytterbium₂O₃ laser or cerium doped lasers and combinations thereof.

The acousto-optic device may be any convenient acousto-optic protocol configured to frequency shift laser light using applied acoustic waves. In the disclosure, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

A controller may be configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

To produce an intensity profile of the angularly deflected laser beams in the output laser beam, the controller may be configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal may have a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In the disclosure, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. The memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In the disclosure, the controller has a processor having memory operably coupled to the processor such that the memory includes instructions stored thereon, which when executed by the processor, cause the processor to produce an output laser beam having increasing intensity from the edges to the center of the output laser beam along the horizontal axis. The intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. The controller may have a processor having memory operably coupled to the processor such that the memory includes instructions stored thereon, which when executed by the processor, cause the processor to produce an output laser beam having an increasing intensity from the edges to the center of the output laser beam along the horizontal axis. The intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. The controller may have a processor having memory operably coupled to the processor such that the memory includes instructions stored thereon, which when executed by the processor, cause the processor to produce an output laser beam having an intensity profile with a Gaussian distribution along the horizontal axis. The controller may have a processor having memory operably coupled to the processor such that the memory includes instructions stored thereon, which when executed by the processor, cause the processor to produce an output laser beam having a top hat intensity profile along the horizontal axis.

Light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. The system may be configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

Light beam generators configured to generate two or more beams of frequency shifted light may include laser excitation modules as described in Diebold, et al. Nature Photonics Vol. 7(10); 806-810 (2013) as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894.

The system may include a light detection system having a plurality of photodetectors for measuring light from the cells in the sample. One or more photodetectors of the light detection system may be light loss photodetectors. One or more photodetectors of the light detection system may be configured to measure scattered light. One or more photodetectors of the light detection system may be configured to measure side-scattered light. One or more photodetectors of the light detection system may be configured to measure forward-scattered light. One or more photodetectors of the light detection system may be configured to measure back-scattered light. Photodetectors of interest may include, but are not limited to optical sensors, such as active-pixel sensors (APSs), avalanche photodiodes (APDs), image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In the disclosure, light from a sample is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors.

Light detection systems of interest may include a plurality of photodetectors. The light detection system may include a plurality of solid-state detectors such as photodiodes. The light detection system may include a photodetector array, such as an array of photodiodes. The photodetector array may include 4 or more photodetectors, such as 10 or more photodetectors, such as 25 or more photodetectors, such as 50 or more photodetectors, such as 100 or more photodetectors, such as 250 or more photodetectors, such as 500 or more photodetectors, such as 750 or more photodetectors and including 1000 or more photodetectors. For example, the detector may be a photodiode array having 4 or more photodiodes, such as 10 or more photodiodes, such as 25 or more photodiodes, such as 50 or more photodiodes, such as 100 or more photodiodes, such as 250 or more photodiodes, such as 500 or more photodiodes, such as 750 or more photodiodes and including 1000 or more photodiodes.

The photodetectors may be arranged in any geometric configuration as desired, where arrangements of interest include, but are not limited to a square configuration, rectangular configuration, trapezoidal configuration, triangular configuration, hexagonal configuration, heptagonal configuration, octagonal configuration, nonagonal configuration, decagonal configuration, dodecagonal configuration, circular configuration, oval configuration as well as irregular patterned configurations. The photodetectors in the photodetector array may be oriented with respect to the other (as referenced in an X-Z plane) at an angle ranging from 10° to 180°, such as from 15° to 170°, such as from 20° to 160°, such as from 25° to 150°, such as from 30° to 120° and including from 45° to 90°. The photodetector array may be any suitable shape and may be a rectilinear shape, e.g., squares, rectangles, trapezoids, triangles, hexagons, etc., curvilinear shapes, e.g., circles, ovals, as well as irregular shapes, e.g., a parabolic bottom portion coupled to a planar top portion. In the disclosure, the photodetector array has a rectangular-shaped active surface.

Each photodetector (e.g., photodiode) in the array may have an active surface with a width that ranges from 5 µm to 250 µm, such as from 10 µm to 225 µm, such as from 15 µm to 200 µm, such as from 20 µm to 175 µm, such as from 25 µm to 150 µm, such as from 30 µm to 125 µm and including from 50 µm to 100 µm and a length that ranges from 5 µm to 250 µm, such as from 10 µm to 225 µm, such as from 15 µm to 200 µm, such as from 20 µm to 175 µm, such as from 25 µm to 150 µm, such as from 30 µm to 125 µm and including from 50 µm to 100 µm, where the surface area of each photodetector (e.g., photodiode) in the array ranges from 25 to µm² to 10000 µm², such as from 50 to µm² to 9000 µm², such as from 75 to µm² to 8000 µm², such as from 100 to µm² to 7000 µm², such as from 150 to µm² to 6000 µm² and including from 200 to µm² to 5000 µm².

The size of the photodetector array may vary depending on the amount and intensity of the light, the number of photodetectors and the desired sensitivity and may have a length that ranges from 0.01 mm to 100 mm, such as from 0.05 mm to 90 mm, such as from 0.1 mm to 80 mm, such as from 0.5 mm to 70 mm, such as from 1 mm to 60 mm, such as from 2 mm to 50 mm, such as from 3 mm to 40 mm, such as from 4 mm to 30 mm and including from 5 mm to 25 mm. The width of the photodetector array may also vary, ranging from 0.01 mm to 100 mm, such as from 0.05 mm to 90 mm, such as from 0.1 mm to 80 mm, such as from 0.5 mm to 70 mm, such as from 1 mm to 60 mm, such as from 2 mm to 50 mm, such as from 3 mm to 40 mm, such as from 4 mm to 30 mm and including from 5 mm to 25 mm. As such, the active surface of the photodetector array may range from 0.1 mm² to 10000 mm², such as from 0.5 mm² to 5000 mm², such as from 1 mm² to 1000 mm², such as from 5 mm² to 500 mm², and including from 10 mm² to 100 mm².

Photodetectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths.

Photodetectors may be configured to measure collected light over a range of wavelengths (e.g., 200 nm - 1000 nm). In the disclosure, photodetectors of interest are configured to collect spectra of light over a range of wavelengths. For example, systems may include one or more detectors configured to collect spectra of light over one or more of the wavelength ranges of 200 nm - 1000 nm. Detectors of interest may be configured to measure light from the sample in the flow stream at one or more specific wavelengths. For example, systems may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof.

The light detection system is configured to measure light continuously or in discrete intervals. Photodetectors of interest may be configured to take measurements of the collected light continuously. The light detection system may be configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

The system may include a processor having memory operably coupled to the processor where the memory include instructions stored thereon, which when executed by the processor, cause the processor to generate data in response to the measured light. Data signals from the light detection system may be generated in a number of different photodetector channels, such as 2 or more photodetector channels, such as 3 or more, such as 4 or more, such as 5 or more, such as 6 or more, such as 7 or more, such as 8 or more, such as 12 or more, such as 16 or more, such as 24 or more, such as 32 or more, such as 64 and including in 128 photodetector channels. The data may be generated in one or more fluorescence photodetector channels. The data may be generated in a light loss photodetector channel. The data is generated in a scattered light photodetector channel (e.g., a forward scatter photodetector channel, a side-scatter photodetector channel).

The generated data may be image data. The image data may include dark field images of the cell. The image data may include light field images of the cell. The image data may include fluorescence-labelled images of the cell. The image data may include label-free images of the cell. The image data may include autofluorescence image data. The image data may include 1 or more images of the cells, such as 2 or more, such as 3 or more, such as 4 or more, such as 5 or more, such as 10 or more, such as 15 or more, such as 25 or more and including 50 or more images of the cells. The image data may include 2 or more different types of images (e.g., fluorescence-labelled images, autofluorescence images, dark-field images, etc.), such as 3 or more different types of images, such as 4 or more different types of images and including 5 or more different types of images. In the disclosure, the image data includes images that have been converted from one type of image to another, such as where images generated in a light loss photodetector channel (e.g., a brightfield image) are inverted to create dark field images.

The system may include memory having instructions stored thereon for generating the image from detected light absorption, detected light scatter, detected light emission or any combination thereof. The memory may include instructions for generating the image from light absorption detected from the sample, such as from a brightfield light detector. The memory may include instructions for generating the image from light scatter detected from the sample, such as from a side scatter detector, a forward scatter detector or a combination of a side scatter detector and forward scatter detector. The memory may include instructions for generating the image from emitted light from the sample. The memory may include instructions for generating the image from a combination of detected light absorption and detected light scatter.

The memory may include instructions to receive two or more data sets associated with the plurality of data modes. The data mode may be an image data mode. The data mode may be a sequence data mode (e.g., waveforms). The data mode may be a tabular data mode. The ability of the methods and systems herein to receive image data, waveform data, spectral data, and scattering data enables the inclusion of various forms of data from different sources. The ability of the methods and systems herein provide general workflow for flow cytometric data analysis that integrates multi-modal datasets such as images, waveforms, and tabular data.

The plurality of data modes may include an image data mode. The memory may include instructions for generating a single image for each cell in the sample from each form of detected light. The memory may include instructions for generating a plurality of images for each cell, such as 2 or more, such as 3 or more, such as 5 or more, such as 10 or more and including 25 or more images for each cell. For example, the memory includes instructions for generating a first image of the cell from fluorescence detected from the labelled cell; instructions for generating a second image of the cell from detected light absorption and instructions for generating a third image from detected light scatter. The memory may include instructions to generate two or more images from each form of detected light, such as 3 or more, such as 4 or more, such as 5 or more and including 10 or more images or a combination thereof.

The algorithm may be a rule-based image processing algorithm. The algorithm may include a neural network. The memory may include instructions to invert a lightloss channel of the data set associated with the image data mode, scale a pixel value of each channel of the data set associated with the image data mode to a zero mean, scale a pixel value of each channel of the data set associated with the image data mode to a unit standard deviation or a combination thereof.

The memory may include instructions to generate image data, such as digital waveforms generated in one or more photodetector channels. The memory may include instructions for calculating image parameters directly from the waveforms. The memory may include instructions for calculating image parameters from the image data, the generated images or a combination thereof. The memory may include instructions for determining the cell parameters only from calculated image parameters (e.g., radial moment, eccentricity, etc.) The memory may include instructions for determining the cell parameters only from the images of the particles and not from another data source, such as for example data signal waveforms. The memory may include instructions for determining cell parameters using a combination of a generated image of the particles and data signal waveforms generated in response to measured light from irradiated particles.

The system may include memory having instructions for generating frequency-encoded data (e.g., frequency-encoded spatial data) from the measured light from the cells of the sample in the flow stream. The memory may include instructions for generating one or more images from the frequency-encoded data. The frequency-encoded data may be generated in one or more detection channels, such as 2 or more, such as 3 or more, such as 4 or more, such as 5 or more, such as 6 or more and including 8 or more detection channels. The frequency-encoded data may include data components taken (or derived) from light from different detectors, such as detected light absorption or detected light scatter. The memory may include instructions for phase-correcting the frequency-encoded data. The memory may include instructions to generate phase-corrected images of the cells by performing a transform on the frequency-encoded data. In one example, the memory includes instructions to phase correct the frequency-encoded data by performing a Fourier transform (FT) of the frequency-encoded data. In another example, the memory includes instructions to phase correct the frequency-encoded data by performing a discrete Fourier transform (DFT) of the frequency-encoded data. In yet another example, the memory includes instructions to phase correct the frequency-encoded data by performing a short time Fourier transform (STFT) of the frequency-encoded data. In the disclosure, the memory includes instructions for performing a transform of the frequency encoded data without performing any mathematical imaginary computations (i.e., only performing computations for mathematical real computations of the transform) to generate an image from the frequency-encoded data.

The plurality of data modes may include a sequence data mode. The sequence data may include waveforms generated in one or more different photodetector channels. The sequence data may include raw waveforms. The sequence data may include raw image data in the form of the raw waveforms generated in the imaging photodetector channels. The sequence data may include raw waveforms and the image data is generated in real-time from the raw waveforms.

The plurality of data modes may include a tabular data mode. The tabular data may be applied to the neural network as flow cytometric data files of the tabular data. The tabular data may be spectral tabular data generated in one or more fluorescence photodetector channels. The spectral tabular data may be generated from fluorescence measured at 1 or more spectral wavelength ranges of light, such as 2 or more, such as 3 or more, such as 4 or more, such as 5 or more, such as 6 or more, such as 7 or more, such as 8 or more, such 9 or more, such as 10 or more, such as 12 or more, such as 16 or more and including 24 or more different spectral wavelength ranges of light. The spectral tabular data may be uncompensated or unprocessed spectral data. The spectral tabular data may be compensated or unmixed spectra data. The spectral tabular data can be unmixed by spectrally resolving the light from each fluorophore in the sample (e.g., using a weighted least squares algorithm or a generalized least squares algorithm). The overlap between each different fluorophore may be determined and the contribution of each fluorophore to the overlapping fluorescence is calculated. The spectral tabular data may be spectrally resolved by calculating a spectral unmixing matrix for the fluorescence spectra for each of the plurality of fluorophores having overlapping fluorescence in the sample detected by the light detection system. For example, spectral unmixing of the spectral tabular data may include a Moore-Penrose inverse or pseudoinverse of the spectral matrix. The algorithm for spectral unmixing may be characterized by a Cholesky decomposition of the unmixing matrix. Unmixed spectral tabular data may be calibrated using a calibration scaling factor and the fluorophore abundance.

The spectral tabular data from each fluorophore (e.g., calculating a spectral unmixing matrix for each fluorophore) may be used to estimate the abundance of each fluorophore in the sample. In the disclosure, the abundance of each fluorophore associated with a target particle may be determined. In the disclosure, the spectral tabular data are spectrally unmixed by unmixing algorithms such as those described in United States Patent No. 11,009,400, United States Patent Publication No. 2024/0192122 filed on December 12, 2023 and United States Patent Application No. 18/986,295 filed on December 18, 2024.

Cells of the sample may be tagged with one or more fluorophore markers. Fluorochromes of interest may include, but are not limited to, a bodipy dye, a coumarin dye, a rhodamine dye, an acridine dye, an anthraquinone dye, an arylmethane dye, a diarylmethane dye, a chlorophyll containing dye, a triarylmethane dye, an azo dye, a diazonium dye, a nitro dye, a nitroso dye, a phthalocyanine dye, a cyanine dye, an asymmetric cyanine dye, a quinon-imine dye, an azine dye, an eurhodin dye, a safranin dye, an indamin, an indophenol dye, a fluorine dye, an oxazine dye, an oxazone dye, a thiazine dye, a thiazole dye, a xanthene dye, a fluorene dye, a pyronin dye, a fluorine dye, a rhodamine dye, a phenanthridine dye, squaraines, bodipys, squarine roxitanes, naphthalenes, coumarins, oxadiazoles, anthracenes, pyrenes, acridines, arylmethines, or tetrapyrroles and a combination thereof. In the disclosure, conjugates may include two or more dyes, such as two or more dyes selected from a bodipy dye, a coumarin dye, a rhodamine dye, an acridine dye, an anthraquinone dye, an arylmethane dye, a diarylmethane dye, a chlorophyll containing dye, a triarylmethane dye, an azo dye, a diazonium dye, a nitro dye, a nitroso dye, a phthalocyanine dye, a cyanine dye, an asymmetric cyanine dye, a quinon-imine dye, an azine dye, an eurhodin dye, a safranin dye, an indamin, an indophenol dye, a fluorine dye, an oxazine dye, an oxazone dye, a thiazine dye, a thiazole dye, a xanthene dye, a fluorene dye, a pyronin dye, a fluorine dye, a rhodamine dye, a phenanthridine dye, squaraines, bodipys, squarine roxitanes, naphthalenes, coumarins, oxadiazoles, anthracenes, pyrenes, acridines, arylmethines, or tetrapyrroles and a combination thereof.

In the disclosure, fluorochromes of interest may include but are not limited to fluorescein isothiocyanate (FITC), a phycoerythrin (PE) dye, a peridinin chlorophyll protein-cyanine dye (e.g., PerCP-Cy5.5), a phycoerythrin-cyanine (PE-Cy) dye (PE-Cy7), an allophycocyanin (APC) dye (e.g., APC-R700), an allophycocyanin-cyanine dye (e.g., APC-Cy7), a coumarin dye (e.g., V450 or V500). Fluorochromes may include one or more of 1,4-bis-(o-methylstyryl)-benzene (bis-MSB 1,4-bis[2-(2-methylphenyl)ethenyl]-benzene), a C510 dye, a C6 dye, nile red dye, a T614 dye (e.g., N-[7-(methanesulfonamido)-4-oxo-6-phenoxychromen-3-yl]formamide), LDS 821 dye ((2-(6-(p-dimethylaminophenyl)-2,4-neopentylene-1,3,5-hexatrienyl)-3-ethylbenzothiazolium perchlorate), an mFluor dye (e.g., an mFluor Red dye such as mFluor 780NS).

Fluorochromes of interest may include, but are not limited to, Fluorescein, Hydroxycoumarin, Aminocoumarin, Methoxycoumarin, Cascade Blue, Pacific Blue, Pacific Orange, Lucifer yellow, NBD, R-Phycoerythrin (PE), PE-Cy5 conjugates, PE-Cy7 conjugates, Red 613, PerCP, TruRed, FluorX, BODIPY-FL, TRITC, X-Rhodamine, Lissamine Rhodamine B, Texas Red, Allophycocyanin (APC), APC-Cy7 conjugates, Cy2, Cy3, Cy3B, Cy3.5, Cy5, Cy5.5, Cy7, Hoechst 33342, DAPI, Hoechst 33258, SYTOX Blue, Chromomycin A3, Mithramycin, YOYO-1, Ethidium Bromide, Acridine Orange, SYTOX Green, TOTO-1, TO-PRO-1, Thiazole Orange, Propidium Iodide (PI), LDS 751, 7-AAD, SYTOX Orange, TOTO-3, TO-PRO-3, DRAQ5, Indo-1, Fluo-3, DCFH, DHR, SNARF, Y66H, Y66F, EBFP, EBFP2, Azurite, GFPuv, T-Sapphire, TagBFP, Cerulean, mCFP, ECFP, CyPet, Y66W, dKeima-Red, mKeima-Red, TagCFP, AmCyan1, mTFP1 (Teal), S65A, Midoriishi-Cyan, Wild Type GFP, S65C, TurboGFP, TagGFP, TagGFP2, AcGFP1, S65L, Emerald, S65T, EGFP, Azami-Green, ZsGreen1, Dronpa-Green, TagYFP, EYFP, Topaz, Venus, mCitrine, YPet, TurboYFP, PhiYFP, PhiYFP-m, ZsYellow1, mBanana, Kusabira-Orange, mOrange, mOrange2, mKO, TurboRFP, tdTomato, DsRed-Express2, TagRFP, DsRed monomer, DsRed2 ("RFP"), mStrawberry, TurboFP602, AsRed2, mRFP1, J-Red, mCherry, HcRed1, mKate2, Katushka (TurboFP635), mKate (TagFP635), TurboFP635, mPlum, mRaspberry, mNeptune, E2-Crimson, Monochlorobimane, Calcein, Alexa Fluor 350, Alexa Fluor 405, Alexa Fluor 430, Alexa Fluor 488, Alexa Fluor 500, Alexa Fluor 514, Alexa Fluor 532, Alexa Fluor 546, Alexa Fluor 555, Alexa Fluor 568, Alexa Fluor 594, Alexa Fluor 610, Alexa Fluor 633, Alexa Fluor 647, Alexa Fluor 660, Alexa Fluor 680, Alexa Fluor 700, Alexa Fluor 750, Alexa Fluor 790, and HyPer, or the like. The fluorochromes may be selected from: 7-AAD, Alexa Fluor 488, Alexa Fluor 647, Alexa Fluor 700, AmCyan, APC, APC-Cy7, APC-H7, APC-R700, BB660-P2, BB790-P, BUV395, BUV615, BUV661, BV570, BV605, BV650, BV711, BV750, BV786, BYG584-P, Calcein AM, Calcein Blue AM, CFSE, DAPI, DRAQ5, DRAQ7, FITC, Fluo-4 AM, FVS440UV, FVS450, FVS510, FVS520, FVS570, FVS575V, FVS620, FVS660, FVS700, FVS780, Indo-1 Hi, Indo-1 Lo, JC-1, MitoStatus Red, MitoStatus TMRE, Pacific Blue, PE, PE-CF594, PE-Cy5, PE-Cy7, PerCP, PerCP-Cy5.5, PI, R718, RB545, RB613, RB744, RB780, RY586, RY610, V450, V500, Via-Probe Green, Via-Probe Red, VPD450, Alexa Fluor 532, Alexa Fluor 561, Alexa Fluor 660, APC-eFluor 780, APC/Fire 750, APC/Fire 810, BV785, eBFP, eCFP, eFluor 450, eFluor 506, eFluor 660, eGFP, eYFP, Hoechst 33258, KIRAVIA Blue 520, mCherry, NFB510, NFB530, NFB555, NFB585, NFB610-70S, NFB660-120S, NFR660, NFR685, NFR700, NFR710, NFY570, NFY590, NFY610, NFY660, NFY690, NFY700, NFY730, Pacific Orange, PE-Cy5.5, PE-eFluor 610, PE/Dazzle 594, PE/Fire 640, PE/Fire 700, PE/Fire 810, PerCP-eFluor 710, SB436, SB600, SB645, SB702, SB780, Spark Blue 550, Spark Blue 574, Spark NIR 685, Spark UV 387, Spark Violet 423, Spark Violet 538, Spark YG 581, Spark YG 593, and tdTomato.

The fluorochrome may be a polymeric dye (e.g., fluorescent polymeric dyes). Fluorescent polymeric dyes that find use in the subject methods and systems are varied. The polymeric dye may include a conjugated polymer. Conjugated polymers (CPs) are characterized by a delocalized electronic structure which includes a backbone of alternating unsaturated bonds (e.g., double and/or triple bonds) and saturated (e.g., single bonds) bonds, where π-electrons can move from one bond to the other. As such, the conjugated backbone may impart an extended linear structure on the polymeric dye, with limited bond angles between repeat units of the polymer. For example, proteins and nucleic acids, although also polymeric, in some cases do not form extended-rod structures but rather fold into higher-order three-dimensional shapes. In addition, CPs may form "rigid-rod" polymer backbones and experience a limited twist (e.g., torsion) angle between monomer repeat units along the polymer backbone chain. The polymeric dye may include a CP that has a rigid rod structure. The structural characteristics of the polymeric dyes can have an effect on the fluorescence properties of the molecules.

Polymeric dyes of interest include, but are not limited to, those dyes described in U.S. Patent Nos. 7,270,956; 7,629,448; 8,158,444; 8,227,187; 8,455,613; 8,575,303; 8,802,450; 8,969,509; 9,139,869; 9,371,559; 9,547,008; 10,094,838; 10,302,648; 10,458,989; 10,641,775 and 10,962,546; and Gaylord et al., J. Am. Chem. Soc., 2001, 123 (26), pp 6417-6418; Feng et al., Chem. Soc. Rev., 2010,39, 2411-2419; and Traina et al., J. Am. Chem. Soc., 2011, 133 (32), pp 12600-12607. Specific polymeric dyes that may be employed include, but are not limited to, BD Horizon Brilliant^{™} Dyes, such as BD Horizon Brilliant^{™} Violet Dyes (e.g., BV421, BV510, BV605, BV650, BV711, BV786); BD Horizon Brilliant^{™} Ultraviolet Dyes (e.g., BUV395, BUV496, BUV737, BUV805); and BD Horizon Brilliant^{™} Blue Dyes (e.g., BB515) (BD Biosciences, San Jose, CA). Any fluorochromes that are known to a skilled artisan-including, but not limited to, those described above-or are yet to be discovered may be employed.

The tabular data may include scattering tabular data. The scattering tabular data may be generated from measured forward scatter light from the sample (i.e., from photodetector signals generated in the forward scatter photodetector channel, FSC). The scattering tabular data is generated from measured side scatter light from the sample (i.e., from photodetector signals generated in the side scatter photodetector channel, SSC).

The memory may include instructions stored thereon, which when executed by the processor of the system, cause the processor to apply an algorithm to convert each of the two or more data sets into feature vectors. The feature vectors may concisely summarize and standardize the parameters and information that is contained in the generated data. A feature vector as described herein may be human-interpretable features of the cells. The feature vector may be a physical characteristic of the cells. The feature vector may be a measurement unit (e.g., size in nanometers) of the cell. The feature vector may be an abundance characteristic of the cell, such as a biomarker abundance, a fluorophore abundance, an autofluorescence abundance or a binding molecule abundance characteristic of the cell. Converting the data sets into a feature vector enables the system and method to form a flexible analysis framework to incorporate prior knowledge of the biological system by feeding only relevant features to specific classifiers. Converting the data sets into a feature vector enables the system and method to provide a general-purpose pretrained foundation model that allows a user to train the classification model for their specific tasks or fine-tune the overall model with a smaller dataset.

Any convenient machine learning algorithm may be implemented to convert the plurality of data modes (e.g., image data mode, sequence data mode and tabular data mode) into feature vectors where machine learning algorithms of interest can include, but are not limited to a linear regression algorithm, a logistic regression algorithm, a Naïve Bayes algorithm, a k-nearest neighbor (kNN) algorithm, a Random forest algorithm, decision tree algorithm, a support vector machine algorithm, a gradient boosting algorithm and a clustering algorithm. The system may be are configured to apply a neural network, such as an artificial neural network, a convolutional neural network or a recurrent neural network. The system may be configured to implement a python script. The system may be configured to apply artificial neural networks (e.g., convolutional neural networks, etc.), Bayesian statistics, learning automata, Hidden Markov Modeling, linear classifiers, quadratic classifiers, association rule learning, and/or the like.

The neural network may include networks of nodes. The nodes may be organized into layers where the first layer is an input layer that data flows into. The neural network may also include an output layer where transformed data flows out. Each individual node may have multiple inputs and a single output (e.g., input layer nodes only have a single input). The output of a node represents a linear combination of the inputs. In other words, inputs may be multiplied by an associated constant. The products may be accumulated along a path of nodes with a constant offset. The constant offset, or "bias", may represent another degree of freedom that can be adjusted during the training process. For example, the constant offset may be a threshold since it has the ability to reduce a node value below zero, causing the activation function to output zero.

The resulting value is evaluated using an activation function and the resulting value is used as the output of the node. The nodes in a given layer within the neural network are connected to each node of an adjacent layer. Neural networks may be trained by minimizing the error of the network using gradient descent algorithm and an error function to compare the desired output of the network and the network's actual output. The weighting for one or more nodes may be adjusted to model a desired result produced by the network. The neural network may apply a sigmoid activation function, an Adam optimizer, an adaptive learning rate, a dynamic threshold, binary classification (e.g., of positive vs negative class), a Binary Cross Entropy loss function, or any combination thereof.

The neural network may include a backpropagation neural network. The neural network may include 2 or more stages, such as 3 or more stages, such as 4 or more stages, such as 5 or more stages, such as 6 or more stages, such as 7 or more stages, such as 8 or more stages, such as 9 or more stages, such as 10 or more stages, such as 12 or more stages, such as 16 or more stages, such as 20 or more stages and including 24 or more stages. The neural network may include from 2 to 32 stages, such as from 2 to 24 stages, such as from 2 to 16 stages and including from 2 to 10 stages. The neural network may include at least one dropout stage. The dropout stage may be configured to prevent overfitting during training.

Each stage may include one or more hidden layers, such as 2 or more hidden layers, such as 3 or more hidden layers, such as 4 or more hidden layers, such as 5 or more hidden layers, such as 6 or more hidden layers, such as 7 or more hidden layers, such as 8 or more hidden layers, such as 9 or more hidden layers, such as 10 or more hidden layers, such as 12 or more hidden layers, such as 16 or more hidden layers, such as 24 or more hidden layers, such as 32 or more hidden layers and including 64 or more hidden layers. Each stage may include at least 2 hidden layers, at least 4 hidden layers, at least 8 hidden layers, at least 12 hidden layers, at least 16 hidden layers, at least 24 hidden layers, at least 32 hidden layers. Each stage may include from 8 to 64 hidden layers.

The memory may include instructions for applying a neural network to convert the generated data into the feature vectors. The neural network may include a feature engineering layer for generating the feature vectors from the two or more data sets (e.g., image data, sequence data and tabular data). The feature engineering layer may convert image data into image parameters of the cell. The feature vector may be a quantitative image parameter. The feature vector may be a radial moment of the cell. The feature vector may be a size of the cell. The feature vector may be diffusivity of the cell. The feature vector may be eccentricity of the cell. The feature vector may be a degree of punctateness of the cell. The feature vector may be the shape of the cell. The feature vector may be one or more morphological features of the cell.

The feature engineering layer may have algorithm for extracting sequence data features from photodetector waveforms. The algorithm may include a sequence learning machine model. The feature engineering layer may apply a machine learning model that extracts features from the waveforms.

The feature engineering layer may have algorithm for spectral unmixing spectral tabular data. The algorithm may include a compensation model, a spectral unmixing model or a combination thereof. The algorithm may include a calibration model. The feature engineering layer may have algorithm for calculating an abundance of a biomarker molecule (e.g., a surface biomarker moiety). The feature engineering layer may have algorithm for calculating fluorophore abundance. The feature engineering layer may have algorithm for calculating physical measurements of the cell based on scattered light tabular data. For example, the feature engineering layer may apply a machine learning model which translates raw scatter channel tabular data into a measurement unit of the cell, such as the size of the cell or cellular components in nanometers.

The memory may include instructions to apply a machine learning algorithm (e.g., a neural network) to determine one or more biological parameters of the cell based on the feature vectors. Depending on the application, different analysis models can be applied to extract biological insights of the cells from the feature vectors.

The analysis model may be an end-to-end model. The end-to-end model may be designed to identify predefined cellular phenotypes. The end-to-end model may be a gating hierarchy or a classification model such as a single classification model or multi-layer classification model (e.g., single layer or multi-layer perceptrons), random forest classifier or a support vector machine. The analysis model may be an exploratory model, such as one which can discover novel cell populations. The exploratory model applied may be a dimensionality reduction algorithm such as uniform manifold approximation and projection (UMAP), t-distributed stochastic neighbor embedding (TSNE) and principal component analysis (PCA).

The analysis model can select all or a subset of feature vectors based on prior knowledge of which features are relevant to the biological parameters of interest. For example, as described in greater detail below a viability classification task can be developed to identify live cells based on the combination of brightfield and darkfield image data from the cell. The analysis model may utilize feature vectors from the light loss, side scatter and forward scatter image data. A TBNK classification task can be designed to classify cells into T-cells, B-cells and natural killer (NK) cells using image data. The analysis model may apply label-free image data and autofluorescence image data to determine the biological parameters from the feature vectors.

The neural network may include a machine-learning encoder layer. The encoder layer may be a rule-based image processing pipeline. The encoder layer may include an image encoder. The image encoder may have an image recognition model architecture. The image encoder may have an encoder model architecture such as RestNet34, ShuffletNet V2, EfficientNet V2-S, Inception V3 and combinations thereof. The memory may include instructions for training the encoder layer using a supervised approach with a weighted cross-entropy loss function. The memory may include instructions for reconstructing images from data waveforms in real time. The trained encoder layer may be validated based on evaluated feature quality. The evaluated feature quality may be determined using a metric such as precision, recall and F-1 score.

The memory may include instructions for applying the neural network to the data to classify the cell based on one or more of the determined feature vectors. The memory may include instructions for applying a dimensionality reduction algorithm to the generated data. The memory may include instructions for applying a dimensionality reduction algorithm to a high-dimension feature vector. The dimensionality reduction algorithm may be selected from uniform manifold approximation and projection (UMAP), t-distributed stochastic neighbor embedding (t-SNE), principal component analysis (PCA) and combinations thereof. The memory may include instructions for classifying the cells based on a gating hierarchy. The memory may include instructions for classifying the cells with a classification model such as a single layer perceptron, multi-layer perceptron, random forest classifiers, support vector machines and combinations thereof.

The memory may include instructions for applying a classification task to the two or more data sets and apply one or more of a plurality of classification models to the feature vector based on the received classification task to determine a class. Receiving and applying a classification task enables the systems and methods herein to extract biological insights of single cells from the heterogenous data sets and provide for generalizable algorithms to generate insightful biological data. The classification task enables the systems and methods to categorize cell types as well as identify specific cells in the sample and their status (e.g., live, viable cells that are activated or dead cells or live cells that are non-activated). The classification task enables the systems and methods to provide human interpretable data of the cells and may sort decision characteristics.

The classification ask may be a viability classification task. The classification task may include a viability classification task and the class includes a live class, a dead class, or an apoptotic class. The memory may include instructions for classifying the data with a cell-type classification task. The cell-type classification task may classify cells into T-cells, B-cells and natural killer (NK)-cells. The memory may include instructions for applying a classification task that includes singlets classification and the class includes a singlets class, an attached doublets class, a separated doublets class, a triplets class, or a debris class. The classification task may include a whole blood classification task and the whole blood classification includes a granulocyte class, a monocyte class, or a lymphocyte class. The classification task may include a T-cell activation classification task and the class includes an activated class, or a non-activated class.

Figure 1A depicts a flow chart for classifying cells of a sample based on feature vectors according to the disclosure. Cells of a sample in a flow stream are irradiated with a light source at step 101. The light from the irradiated cells (e.g., fluorescence and light scatter) is measured with a light detection system having a photodetector at step 102. At step 103, multi-modal data is generated from the measured light including an image data mode, a sequence data mode (raw waveforms) and a tabular data mode (spectral tabular data, scatter light tabular data). Two or more data sets are received by a processor associated (step 104) and an algorithm is applied at step 105 to convert each of the two or more data sets into a feature vector based on the data modes. At step 106, a classification is task is received regarding the two or more data sets and one or more of a plurality of classification models are applied to the feature vector at step 107 based on the received classification task to determine a class.

The neural network may include a learning algorithm configured to train and optimize cell classification. Different datasets may be combined and shuffled, ensuring that each training batch contained samples from various datasets. The datasets may be divided into three different sets: 1) for training; 2) for validation; and 3) for testing. The training data set may include from 40% to 80% of the data, such as from 50% to 75% and including 70% of the data for training. The validation data set may include from 10% to 30% of the data, such as from 15% to 25% and including 30% of the data for validation. The testing data set may include from 5% to 20% of the data, such as from 7.5% to 15% and including 10% of the data for testing.

One or more of the image data mode, sequence data mode and tabular data mode may be processed in real time during application of the training algorithm. Images may be reconstructed from raw data waveforms in real time during application of the training algorithm. The memory may include instructions for image transform before being applied to the neural network. Data from the light loss channel may be inverted to create dark field images. All photodetector channels may be zero-padded. The pixel values of each photodetector channel may be scaled to have zero mean and unit standard deviation.

The training algorithm may include using a supervised approach with a weighted cross-entropy loss function. The weights may be calculated as the product of class weights and task weights, where class weights correspond to the class abundance in a task and task weights correspond to the task abundance across all datasets. An Adam optimizer may be employed with a predetermined learning rate and no weight decay. The predetermined learning rate may range from 1e⁻¹ to 1e⁻⁵, such as from 1e⁻² to 1e⁻⁴ and including a learning rate of 1e⁻³. The learning rate may have no weight decay. The learning rate may be reduced by a predetermined factor if validation loss remains unchanged, such as if validation loss remains unchanged for 1 epoch or more, such as 2 epochs or more, such as 3 epochs or more, such as 5 epochs or more, such as 10 epochs or more, such as 15 epochs or more, such as 20 epochs or 25 epochs or more and including for 50 epochs or more. Here the learning rate may be reduced by a factor of 2 or more if validation loss remains unchanged, such as by a factor of 3 or more, such as 4 or more, such as 5 or more, such as 10 or more and including by a factor of 20 or more. The learning rate may be reduced by a factor of 10 if the validation loss remains unchanged for 10 epochs. The batch size for training may vary, having a batch size of 64 or more, such as 128 or more, such as 256 or more and including 512 or more. The batch size may be 128. The batch size may be 512.

The performance of the algorithm may be evaluated. The trained model's performance may be assessed using the validation or test dataset. To evaluate feature quality, a dimensionality reduction may be applied to a high-dimensional feature vector. Applying the dimensionality reduction to a high-dimensional feature vector may provide for examination of how known populations are separated in low-dimensional space. The performance of the algorithm may be measured using one or more of precision, recall and F1 scores for each class. A receiver-operating characteristic curve may be generated for each class. Area under the curve (AUC) may be evaluated to assess the performance of the feature vector algorithm.

Figure 1B depicts an analysis workflow that integrates image, spectral and scattering information from measured single cells according to the disclosure. The workflow includes a data acquisition phase where a single cells are irradiated with a light source and light from the irradiated sample is measured in different photodetector channels. Figure 1B illustrates data acquisition of raw data in a light loss detector channel (LL), a forward scatter channel (FSC), a side scatter channel (SSC) as well as fluorescence (UV1, R4) and imaging photodetector channels (ImgB3). The feature engineering layer of the neural network includes an image or waveform encoder for analysis across the different imaging modalities (LightLoss, Side Scatter, Forward Scatter, and different fluorescence channels) and raw sequence waveforms. A spectral module provides for analysis of fluorescence photodetector channels as spectral tabular data and a scattering modules provides for analysis of scattering photodetector channels as scatter tabular data.

The feature vectors generated with the feature engineering layer are applied to different classifiers to generate biological insights (biological parameters of the cell) through insight distillation. The classifiers may include a viability classifier to determine whether the cells are live or dead. The classifiers may include a singlet classifier to provide for singlet discrimination differentiating the cells from debris, doublets and triplets. Further classifiers can be generated which integrate spectral tabular data and scatter tabular data, such as with an exploratory model (e.g., a dimensionality reduction algorithm).

Table 1 summarizes an example data set used to train an image encoder of the feature engineering layer in the workflow depicted in Figure 1B.

**Table 1**

| **Tasks** | **Cell types** | **# of cells** | **Groundtruth labeling** |
|---|---|---|---|
| Singlet discrimination | PBMC | ~108,000 | DNA staining is used to differentiate debris, singlets, doublets, triplets, and beyond. The image parameters eccentricity and diffusivity are used to differentiate attached doublets from separated doublets. The results are then inspected by human. |
| Viability classification | Jurkat cells | ~36,000 | Jurkat cells were treated with Camptothecin for 4 hours, a drug to induce cell apoptosis. The treated cells were stained with a live dead marker and fluorescent anti-Annexin V to identify live, dead and apoptotic cells. |
| Whole blood classification | Human whole blood | ~96,000 | Human whole blood was stained with stained with fluorescent CD3, CD14, CD66b, CD56, CD19 and CD16 to identify T cells, B cells, NK cells, monocytes and neutrophils. |
| T-cell activation determination | Human T cells | ~86,000 | PBMCs were isolated from whole blood and treated with anti-CD3/28 dynabeads for 3 days to induce T cell activation. |
| | | | Stimulated cells were stained with fluorescent CD3 and T cell activation markers CD25 and CD69 to identify non-activated cells vs activated cells. |

Figure 1C illustrates an example of a label-free image encoder according to the disclosure. The feature vector is linked to multiple classification heads, each dedicated to a different cell phenotyping task. The image encoder of the feature vector engineering layer converts multi-channel label-free images into a feature vector. The image encoder converts a light loss image (LL), forward scatter image (FSC) and side scatter image (SSC) to feature vectors which are used to build classifiers. The generated classification heads include singlets, viability, whole blood and T-cell activation. Examples of light loss images of different cell phenotypes for the classification heads are shown in Figure 1D.

Figure 1E depicts an example performance of classifiers in whole blood classification according to the disclosure. Figure 1F illustrates the performance of classifiers in T-cell activation determination according to the disclosure. The top rows present the outcomes of various dimensionality reduction techniques applied to image feature vectors. Uniform manifold approximation and projection (UMAP) and t-distributed stochastic neighbor embedding (TSNE) plots resolve different phenotypes, while principal component analysis (PCA) plots show overlapping phenotypes in T-cell activation determination due to lower performance by PCA in preserving local structure in high-dimensional space. The bottom left plots display the confusion matrices of the classification results, from which metrics like precision, recall, and F1-score are derived. These results are summarized in the bottom right table, demonstrating that all scores exceed 0.90, highlighting the effectiveness of the multi-head classifiers.

Figure 1G shows a receiver operating characteristic (ROC) curve for the T cell activation dataset according to the disclosure. The area under the curve (AUC) for the classifier is evaluated to be 0.977 which is substantially higher than that of a random guess and is close to the theoretical optimum of one. An example summary of performance across different classifications according to the disclosure is summarized in Table 2.

**Table 2**

| **Application** | **Class** | **Precision** | **Recall** | **F1-score** | **Support** |
|---|---|---|---|---|---|
| **Singlet discrimination (PBMC)** | Singlets | 1.00 | 0.98 | 0.99 | 2800 |
| | Doublets-attached | 0.82 | 0.88 | 0.85 | 92 |
| | Doublets-separated | 0.95 | 0.95 | 0.95 | 330 |
| | Triples-and-beyond | 0.76 | 0.70 | 0.73 | 63 |
| | Debris | 0.95 | 0.99 | 0.97 | 720 |
| **Viability (Jurkat cells)** | Live | 0.94 | 0.92 | 0.93 | 4293 |
| | Dead | 0.95 | 0.96 | 0.95 | 498 |
| | Apoptotic | 0.86 | 0.88 | 0.87 | 2328 |
| | Granulocyte | 1.00 | 1.00 | 1.00 | 11897 |
| **Whole blood cell classification** | Monocyte | 0.92 | 0.93 | 0.92 | 1423 |
| | Lymphocyte | 0.99 | 0.99 | 0.99 | 5858 |
| **T-cell activation** | Non-activated T cell | 0.95 | 0.94 | 0.94 | 5361 |
| | Activated T cell | 0.92 | 0.94 | 0.93 | 4288 |

The memory may include instructions for determining one or more sorting gates for cells of the sample, such as by assigning each cell to a particle population cluster. The memory may include instructions for generating one or more sorting gates that capture cells of a target particle population cluster and exclude cells of a non-target particle population cluster. The memory may include instructions for determining sorting gates that are configured to maximize the inclusion yield of the cells of a target particle population cluster (e.g., cells of a specific classification), such as where the sorting gates are configured to generate an inclusion yield of cells of a target particle population cluster of 50% or more, such as 55% or more, such as 60% or more, such as 65% or more, such as 70% or more, such as 75% or more, such as 80% or more, such as 85% or more, such as 90% or more, such as 95% or more, such as 97% or more, such as 99% or more and including determining a sorting gate that is configured to generate an inclusion yield of cells of a target particle population cluster of 99.9% or more. The memory may include instructions for determining sorting gates that are configured to maximize the purity yield of the cells of a target particle population cluster, such as where the sorting gates are configured to generate a purity yield of cells of a target particle population cluster of 50% or more, such as 55% or more, such as 60% or more, such as 65% or more, such as 70% or more, such as 75% or more, such as 80% or more, such as 85% or more, such as 90% or more, such as 95% or more, such as 97% or more, such as 99% or more and including determining a sorting gate that is configured to generate a purity yield of cells of a target particle population cluster of 99.9% or more.

The memory may include instructions for determining sorting gates that are configured to maximize the exclusion of cells of a non-target particle population. The memory may include instructions for determining sorting gates that are configured to exclude 50% or more of cells of non-target particle populations, such as 55% or more, such as 60% or more, such as 65% or more, such as 70% or more, such as 75% or more, such as 80% or more, such as 85% or more, such as 90% or more, such as 95% or more, such as 97% or more, such as 99% or more and including determining a sorting gate that is configured to exclude 99.9% or more of cells of a non-target particle population cluster.

The memory may include instructions for assessing the sorting gates of the gating strategy and adjusting one or more of the generated sorting gates. The adjustment may be made based on a metric indicating the accuracy of the sorting gates according to the desired sorting strategy. The metric may be an accuracy (e.g., purity) metric where the purity is compared to a predetermined threshold. The metric may be generated based on a confidence of the classifiers included in the sort strategy. The metric may be a yield metric where the yield of target cells of a particle population cluster is compared to a predetermined threshold.

The memory may include instructions for generating a sorting decision based on the determined sorting gates for the cells of the sample. The memory may include instructions for generating a particle sorting decision using a gating strategy of 8 sorting gates or less, such as 7 sorting gates or less, such as 6 sorting gates or less, such as 5 sorting gates or less, such as 4 sorting gates or less, such as 3 sorting gates or less and including 2 sorting gates or less. The memory may include instructions for generating sorting gates using a graphical display that displays one or more analysis algorithms for applying the classification parameters to the image parameters determined for the cells.

The memory may include instructions for generating sorting gates using a graphical display that displays one or more analysis algorithms for applying the determined classification parameters to the image parameters determined for the cells. The system may include a display for visualizing the gating strategy on a graphical user interface.

The graphical user interface may apply an analysis algorithm for generating the gating strategy. For example, the analysis algorithm may be one or more of a spectral compensation matrix, a clustering algorithm and a t-Distributed Stochastic Neighbor Embedding (t-SNE) algorithm. The analysis algorithm may be applied to the particle population cluster by dragging an icon of the analysis algorithm onto the particle population cluster. The particle population cluster may be selected and the analysis algorithm may be applied by selecting from a drop-down menu. The analysis algorithm may be a spectral unmixing algorithm, such as described in U.S. Patent No. 11,009,400 and International Patent Application No. PCT/US2021/46741 filed on August 19, 2021.

The system may include memory having instructions for determining the gating strategy using computational sorting algorithms such as described with in U.S. Patent No. 11,513,054. The system may include memory having computer software for determining the sorting gate such as HyperFinder (e.g., as described in Bonavia, et al. *Frontiers in Immunology* 2022; 13: 1007016) and Computational Sorting with HyperFinder, FlowJo Software and BD FACSDiva Software (Becton Dickinson, 2021. In the disclosure, the gating strategy may be developed on a separate computational system (e.g., a different computer system or network) and communicated to a flow cytometer for implementing the gating strategy, such as for example using a particle sorter (e.g, having a sort decision module) of the flow cytometer.

The system for generating the gating strategy may be part of or operationally coupled to a particle analyzer system (e.g., a flow cytometer) for generating flow cytometer data described herein.

The system may include an integrated circuit device programmed to implement one or more of the methods described herein. An integrated circuit device of interest may include a field programmable gate array (FPGA). An integrated circuit device may include an application specific integrated circuit (ASIC). An integrated circuit device may include a complex programmable logic device (CPLD).

The system may include a particle sorter component. The sorting mechanism may be configured for sorting a cell into a container based on the presence, the classification, or both, of the cell in the sample. The term "sorting" is used herein in its conventional sense to refer to separating components (e.g., target cells with mitochondria morphology of interest, non-target cells with mitochondria morphology that is not of interest, non-cellular particles such as biological macromolecules) of the sample and may deliver the separated components to one or more sample collection containers. For example, the subject systems may be configured for sorting samples having 2 or more components, such as 3 or more components, such as 4 or more components, such as 5 or more components, such as 10 or more components, such as 15 or more components and including soring a sample having 25 or more components. One or more of the sample components may be separated from the sample and delivered to a sample collection container, such as 2 or more sample components, such as 3 or more sample components, such as 4 or more sample components, such as 5 or more sample components, such as 10 or more sample components and including 15 or more sample components may be separated from the sample and delivered to a sample collection container.

A particle sorting system of interest may be configured to sort particles with an enclosed particle sorting module, such as those described in U.S. Patent Publication No. 2017/0299493, filed on March 28, 2017. In the disclosure, particles (e.g., cells) of the sample are sorted using a sort decision module having a plurality of sort decision units, such as those described in U.S. Patent Publication No. 2020/0256781. The subject system may include a particle sorting module having deflector plates, such as described in U.S. Patent Publication No. 2017/0299493, filed on March 28, 2017.

The system may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, other high level or low-level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. The processor may be any suitable analog or digital system. The processor may include analog electronics which provide feedback control, such as for example negative feedback control.

The system memory may be any of a variety of known or future memory storage devices. Examples include any commonly available random-access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, a removable hard disk drive, or a diskette drive. Such types of memory storage devices typically read from, and/or write to, a program storage medium (not shown) such as, respectively, a compact disk, magnetic tape, removable hard disk, or floppy diskette. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

A computer program product may be described comprising a computer usable medium having control logic (computer software program, including program code) stored therein. The control logic, when executed by the processor the computer, causes the processor to perform functions described herein. Some functions may be implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the invention also include programming, e.g., in the form of computer program products, algorithms for use in practicing the methods as described above. Programming according to the present invention can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

The system according to the present disclosure may be configured to include a communication interface. The communication interface may include a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, WiFi, infrared, wireless Universal Serial Bus (USB), Ultra-Wide Band (UWB), Bluetooth^{®} communication protocols, and cellular communication, such as code division multiple access (CDMA) or Global System for Mobile communications (GSM).

The communication interface may be configured to include one or more communication ports, e.g., physical ports or interfaces such as a USB port, an RS-232 port, or any other suitable electrical connection port to allow data communication between the subject systems and other external devices such as a computer terminal (for example, at a physician's office or in hospital environment) that is configured for similar complementary data communication.

The communication interface may be configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

The communication interface may be configured to provide a connection for data transfer utilizing Internet Protocol (IP) through a cell phone network, Short Message Service (SMS), wireless connection to a personal computer (PC) on a Local Area Network (LAN) which is connected to the internet, or WiFi connection to the internet at a WiFi hotspot.

The subject system may be configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. The server device may have a display, such as a liquid crystal display (LCD), as well as an input device, such as buttons, a keyboard, mouse or touch-screen.

The communication interface may be configured to automatically or semiautomatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternatives using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a work station, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows 10, Windows NT^{®}, Windows XP, Windows 7, Windows 8, iOS, Sun Solaris, Linux, OS/400, Compaq Tru64 Unix, SGI IRIX, Siemens Reliant Unix, Ubuntu, Zorin OS and others.

In the disclosure, the subject system may include one or more optical adjustment components for adjusting the light such as light irradiated onto the sample (e.g., from a laser) or light collected from the sample (e.g., scattered, fluorescence). For example, the optical adjustment may be to increase the dimensions of the light, the focus of the light or to collimate the light. Optical adjustment may be a magnification protocol so as to increase the dimensions of the light (e.g., beam spot), such as increasing the dimensions by 5% or more, such as by 10% or more, such as by 25% or more, such as by 50% or more and including increasing the dimensions by 75% or more. Optical adjustment may include focusing the light so as to reduce the light dimensions, such as by 5% or greater, such as by 10% or greater, such as by 25% or greater, such as by 50% or greater and including reducing the dimensions of the beam spot by 75% or greater. Optical adjustment may include collimating the light. The term "collimate" is used in its conventional sense to refer to the optically adjusting the collinearity of light propagation or reducing divergence by the light of from a common axis of propagation. Collimating may include narrowing the spatial cross section of a light beam (e.g., reducing the beam profile of a laser)

The optical adjustment component is a focusing lens having a magnification ratio of from 0.1 to 0.95, such as a magnification ratio of from 0.2 to 0.9, such as a magnification ratio of from 0.3 to 0.85, such as a magnification ratio of from 0.35 to 0.8, such as a magnification ratio of from 0.5 to 0.75 and including a magnification ratio of from 0.55 to 0.7, for example a magnification ratio of 0.6. For example, the focusing lens may be a double achromatic de-magnifying lens having a magnification ratio of about 0.6. The focal length of the focusing lens may vary, ranging from 5 mm to 20 mm, such as from 6 mm to 19 mm, such as from 7 mm to 18 mm, such as from 8 mm to 17 mm, such as from 9 mm to 16 and including a focal length ranging from 10 mm to 15 mm. In the disclosure, the focusing lens has a focal length of about 13 mm.

The optical adjustment component may be a collimator. The collimator may be any convenient collimating protocol, such as one or more mirrors or curved lenses or a combination thereof. For example, the collimator may be a single collimating lens. The collimator may be a collimating mirror. The collimator may include two lenses. The collimator may include a mirror and a lens. Where the collimator includes one or more lenses, the focal length of the collimating lens may vary, ranging from 5 mm to 40 mm, such as from 6 mm to 37.5 mm, such as from 7 mm to 35 mm, such as from 8 mm to 32.5 mm, such as from 9 mm to 30 mm, such as from 10 mm to 27.5 mm, such as from 12.5 mm to 25 mm and including a focal length ranging from 15 mm to 20 mm.

The system may include a flow cell nozzle having a nozzle orifice configured to flow a flow stream through the flow cell nozzle. The subject flow cell nozzle has an orifice which propagates a fluidic sample to a sample interrogation region, where the flow cell nozzle may include a proximal cylindrical portion defining a longitudinal axis and a distal frustoconical portion which terminates in a flat surface having the nozzle orifice that is transverse to the longitudinal axis. The length of the proximal cylindrical portion (as measured along the longitudinal axis) may vary ranging from 1 mm to 15 mm, such as from 1.5 mm to 12.5 mm, such as from 2 mm to 10 mm, such as from 3 mm to 9 mm and including from 4 mm to 8 mm. The length of the distal frustoconical portion (as measured along the longitudinal axis) may also vary, ranging from 1 mm to 10 mm, such as from 2 mm to 9 mm, such as from 3 mm to 8 mm and including from 4 mm to 7 mm. The diameter of the of the flow cell nozzle chamber may vary, ranging from 1 mm to 10 mm, such as from 2 mm to 9 mm, such as from 3 mm to 8 mm and including from 4 mm to 7 mm.

The nozzle chamber may not include a cylindrical portion and the entire flow cell nozzle chamber is frustoconically shaped. The length of the frustoconical nozzle chamber (as measured along the longitudinal axis transverse to the nozzle orifice), may range from 1 mm to 15 mm, such as from 1.5 mm to 12.5 mm, such as from 2 mm to 10 mm, such as from 3 mm to 9 mm and including from 4 mm to 8 mm. The diameter of the proximal portion of the frustoconical nozzle chamber may range from 1 mm to 10 mm, such as from 2 mm to 9 mm, such as from 3 mm to 8 mm and including from 4 mm to 7 mm.

The sample flow stream may emanate from an orifice at the distal end of the flow cell nozzle. Depending on the desired characteristics of the flow stream, the flow cell nozzle orifice may be any suitable shape where cross-sectional shapes of interest include, but are not limited to: rectilinear cross sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. In the disclosure, the flow cell nozzle of interest may have a circular orifice. The size of the nozzle orifice may vary, in some embodiments ranging from 1 µm to 20000 µm, such as from 2 µm to 17500 µm, such as from 5 µm to 15000 µm, such as from 10 µm to 12500 µm, such as from 15 µm to 10000 µm, such as from 25 µm to 7500 µm, such as from 50 µm to 5000 µm, such as from 75 µm to 1000 µm, such as from 100 µm to 750 µm and including from 150 µm to 500 µm. In the disclosure, the nozzle orifice is 100 µm.

The flow cell nozzle may include a sample injection port configured to provide a sample to the flow cell nozzle. The sample injection system may be configured to provide suitable flow of sample to the flow cell nozzle chamber. Depending on the desired characteristics of the flow stream, the rate of sample conveyed to the flow cell nozzle chamber by the sample injection port may be1 µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more, such as 100 µL/sec or more, such as 150 µL/sec or more , such as 200 µL/sec or more, such as 250 µL/sec or more, such as 300 µL/sec or more, such as 350 µL/sec or more, such as 400 µL/sec or more, such as 450 µL/sec or more and including 500 µL/sec or more. For example, the sample flow rate may range from 1 µL/sec to about 500 µL/sec, such as from 2 µL/sec to about 450 µL/sec, such as from 3 µL/sec to about 400 µL/sec, such as from 4 µL/sec to about 350 µL/sec, such as from 5 µL/sec to about 300 µL/sec, such as from 6 µL/sec to about 250 µL/sec, such as from 7 µL/sec to about 200 µL/sec, such as from 8 µL/sec to about 150 µL/sec, such as from 9 µL/sec to about 125 µL/sec and including from 10 µL/sec to about 100 µL/sec.

The sample injection port may be an orifice positioned in a wall of the nozzle chamber or may be a conduit positioned at the proximal end of the nozzle chamber. Where the sample injection port is an orifice positioned in a wall of the nozzle chamber, the sample injection port orifice may be any suitable shape where cross-sectional shapes of interest include, but are not limited to: rectilinear cross sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In the disclosure, the sample injection port may have has a circular orifice. The size of the sample injection port orifice may vary depending on shape, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

The sample injection port may be a conduit positioned at a proximal end of the flow cell nozzle chamber. For example, the sample injection port may be a conduit positioned to have the orifice of the sample injection port in line with the flow cell nozzle orifice. Where the sample injection port is a conduit positioned in line with the flow cell nozzle orifice, the cross-sectional shape of the sample injection tube may be any suitable shape where cross-sectional shapes of interest include, but are not limited to: rectilinear cross sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

The flow cell nozzle may also include a sheath fluid injection port configured to provide a sheath fluid to the flow cell nozzle. The sheath fluid injection system may be configured to provide a flow of sheath fluid to the flow cell nozzle chamber, for example in conjunction with the sample to produce a laminated flow stream of sheath fluid surrounding the sample flow stream. Depending on the desired characteristics of the flow stream, the rate of sheath fluid conveyed to the flow cell nozzle chamber by the may be 25µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more. For example, the sheath fluid flow rate may range from 1 µL/sec to about 500 µL/sec, such as from 2 µL/sec to about 450 µL/sec, such as from 3 µL/sec to about 400 µL/sec, such as from 4 µL/sec to about 350 µL/sec, such as from 5 µL/sec to about 300 µL/sec, such as from 6 µL/sec to about 250 µL/sec, such as from 7 µL/sec to about 200 µL/sec, such as from 8 µL/sec to about 150 µL/sec, such as from 9 µL/sec to about 125 µL/sec and including from 10 µL/sec to about 100 µL/sec.

The sheath fluid injection port may be an orifice positioned in a wall of the nozzle chamber. The sheath fluid injection port orifice may be any suitable shape where cross-sectional shapes of interest include, but are not limited to: rectilinear cross sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sample injection port orifice may vary depending on shape, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

The system may include a sample interrogation region in fluid communication with the flow cell nozzle orifice. A sample flow stream may emanate from an orifice at the distal end of the flow cell nozzle and particles in the flow stream may be irradiated with a light source at the sample interrogation region. The size of the interrogation region may vary depending on the properties of the flow nozzle, such as the size of the nozzle orifice and sample injection port size. The interrogation region may have a width that is 0.01 mm or more, such as 0.05 mm or more, such as 0.1 mm or more, such as 0.5 mm or more, such as 1 mm or more, such as 2 mm or more, such as 3 mm or more, such as 5 mm or more and including 10 mm or more. The length of the interrogation region may also vary, ranging along 0.01 mm or more, such as 0.1 mm or more, such as 0.5 mm or more, such as 1 mm or more, such as 1.5 mm or more, such as 2 mm or more, such as 3 mm or more, such as 5 mm or more, such as 10 or more, such as 15 mm or more, such as 20 mm or more, such as 25 mm or more and including 50 mm or more.

The interrogation region may be configured to facilitate irradiation of a planar cross-section of an emanating flow stream or may be configured to facilitate irradiation of a diffuse field (e.g., with a diffuse laser or lamp) of a predetermined length. The interrogation region may include a transparent window that facilitates irradiation of a predetermined length of an emanating flow stream, such as 1 mm or more, such as 2 mm or more, such as 3 mm or more, such as 4 mm or more, such as 5 mm or more and including 10 mm or more. Depending on the light source used to irradiate the emanating flow stream (as described below), the interrogation region may be configured to pass light that ranges from 100 nm to 1500 nm, such as from 150 nm to 1400 nm, such as from 200 nm to 1300 nm, such as from 250 nm to 1200 nm, such as from 300 nm to 1100 nm, such as from 350 nm to 1000 nm, such as from 400 nm to 900 nm and including from 500 nm to 800 nm. As such, the interrogation region may be formed from any transparent material which passes the desired range of wavelength, including but not limited to optical glass, borosilicate glass, Pyrex glass, ultraviolet quartz, infrared quartz, sapphire as well as plastic, such as polycarbonates, polyvinyl chloride (PVC), polyurethanes, polyethers, polyamides, polyimides, or copolymers of these thermoplastics, such as PETG (glycol-modified polyethylene terephthalate), among other polymeric plastic materials, including polyester, where polyesters of interest may include, but are not limited to poly(alkylene terephthalates) such as poly(ethylene terephthalate) (PET), bottle-grade PET (a copolymer made based on monoethylene glycol, terephthalic acid, and other comonomers such as isophthalic acid, cyclohexene dimethanol, etc.), poly(butylene terephthalate) (PBT), and poly(hexamethylene terephthalate); poly(alkylene adipates) such as poly(ethylene adipate), poly(1,4-butylene adipate), and poly(hexamethylene adipate); poly(alkylene suberates) such as poly(ethylene suberate); poly(alkylene sebacates) such as poly(ethylene sebacate); poly(ε-caprolactone) and poly(β-propiolactone); poly(alkylene isophthalates) such as poly(ethylene isophthalate); poly(alkylene 2,6-naphthalene-dicarboxylates) such as poly(ethylene 2,6-naphthalenedicarboxylate); poly(alkylene sulfonyl-4,4'-dibenzoates) such as poly(ethylene sulfonyl-4,4'-dibenzoate); poly(p-phenylene alkylene dicarboxylates) such as poly(p-phenylene ethylene dicarboxylates); poly(trans-1,4-cyclohexanediyl alkylene dicarboxylates) such as poly(trans-1,4-cyclohexanediyl ethylene dicarboxylate); poly(1,4-cyclohexane-dimethylene alkylene dicarboxylates) such as poly(1,4-cyclohexane-dimethylene ethylene dicarboxylate); poly([2.2.2]-bicyclooctane-1,4-dimethylene alkylene dicarboxylates) such as poly([2.2.2]-bicyclooctane-1,4-dimethylene ethylene dicarboxylate); lactic acid polymers and copolymers such as (S)-polylactide, (R,S)-polylactide, poly(tetramethylglycolide), and poly(lactide-co-glycolide); and polycarbonates of bisphenol A, 3,3'-dimethylbisphenol A, 3,3',5,5'-tetrachlorobisphenol A, 3,3',5,5'-tetramethylbisphenol A; polyamides such as poly(p-phenylene terephthalamide); polyesters, e.g., polyethylene terephthalates, e.g., Mylar^{™} polyethylene terephthalate; etc. The subject system may include a cuvette positioned in the sample interrogation region. The cuvette may pass light that ranges from 100 nm to 1500 nm, such as from 150 nm to 1400 nm, such as from 200 nm to 1300 nm, such as from 250 nm to 1200 nm, such as from 300 nm to 1100 nm, such as from 350 nm to 1000 nm, such as from 400 nm to 900 nm and including from 500 nm to 800 nm.

The subject system may be a flow cytometric system that includes the photodiode and amplifier component as part of a light detection system for detecting light emitted by a sample in a flow stream. Suitable flow cytometry systems may include, but are not limited to, those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter or the like.

The subject system may be a flow cytometric system, such as described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

The flow cytometer may be configured as an imaging flow cytometer. For example, the system may be a flow cytometry system configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

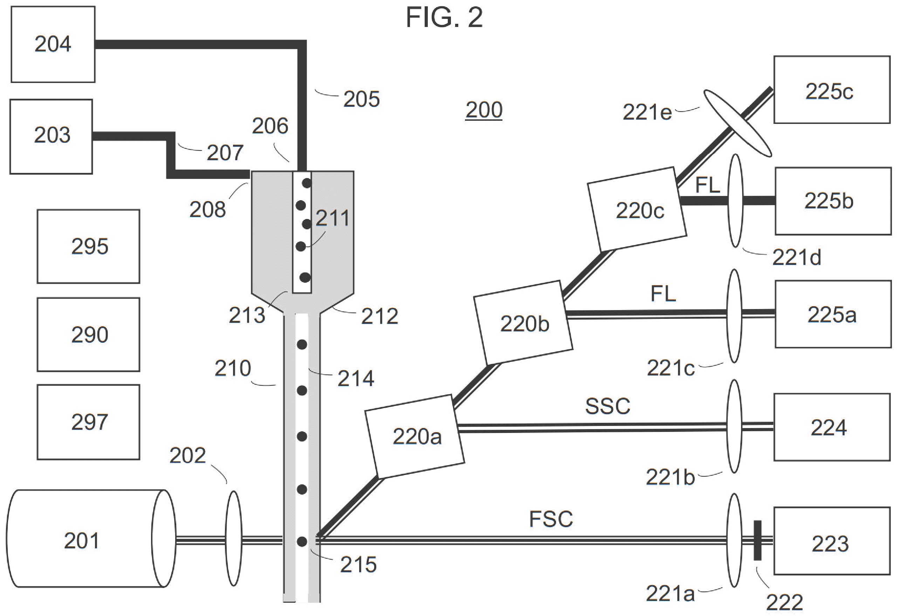

**FIG. 2** shows a system 200 for flow cytometry in accordance with the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. A display may also form part of the I/O capabilities 297 for presenting experimental data to users of the cytometer 200. Alternatively, some or all of the memory 295 and controller/processor 290 and I/O capabilities may be part of one or more external devices such as a general purpose computer. Some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

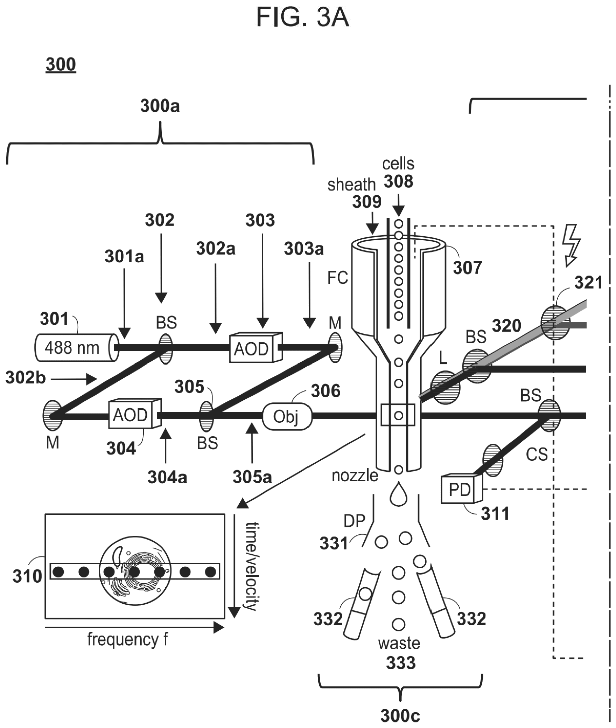

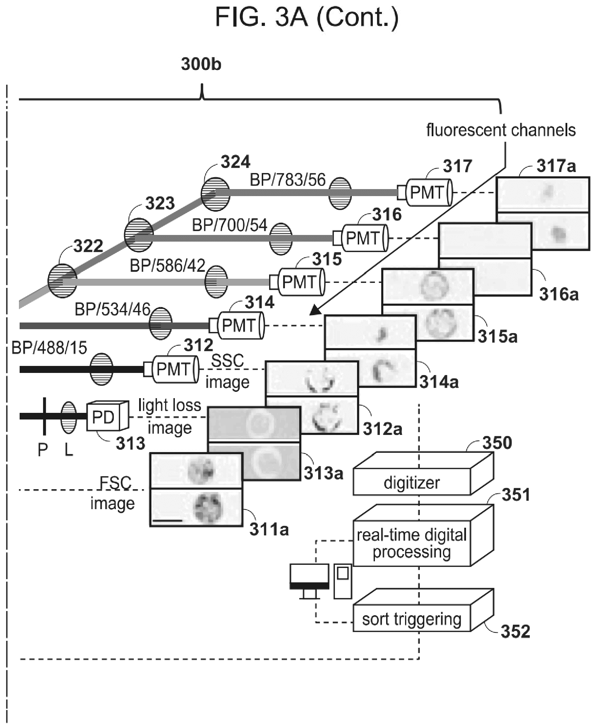

In the disclosure, the system may be image-enabled particle sorter using frequency-encoded data, such as depicted in FIG. 3A. Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. Output beam 303a generated from acousto-optic device 303 may include a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. Output beam 304a may be generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In the disclosure, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In the disclosure, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. Forward scatter detector 311 and side scatter detector 312 may be photodiodes (e.g., avalanche photodiodes, APDs). Brightfield photodetector 313 may be a photomultiplier tube (PMT). Fluorescence from the irradiated sample is also detected with fluorescence photodetectors 314-317. Photodetectors 314-317 may be photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. Optical component 321 may be a 534 nm/40 nm bandpass. Optical component 322 may be a 586 nm/42 nm bandpass. Optical component 323 may be a 700 nm/54 nm bandpass. Optical component 324 may be a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. Sort component 300c may be configured to sort particles with an enclosed particle sorting module, such as those described in U.S. Patent Publication No. 2017/0299493, filed on March 28, 2017. In the disclosure, sorting component 300c may include a sort decision module having a plurality of sort decision units, such as those described in U.S. Patent Publication No. 2020/0256781.

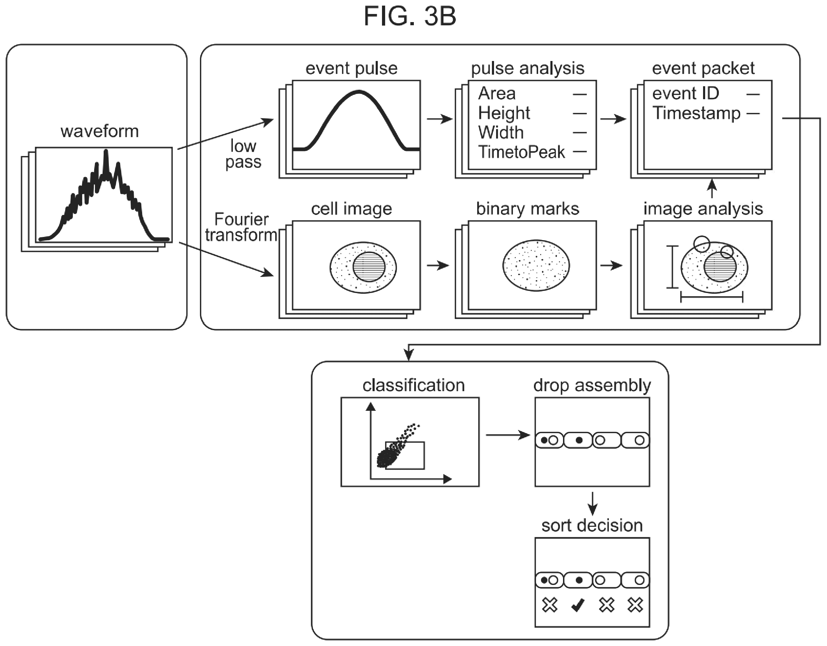

Figure 3B depicts image-enabled particle sorting data processing according to the disclosure. Image-enabled particle sorting data processing may be a low-latency data processing pipeline. Each photodetector produces a pulse with high-frequency modulations encoding the image (waveform). Fourier analysis is performed to reconstruct the image from the modulated pulse. An image processing pipeline produces a set of image features (image analysis), which are combined with features derived from a pulse processing pipeline (event packet). Real-time sort classification electronics then classify the particle based on image features, producing a sort decision that is used to selectively charge the droplets.

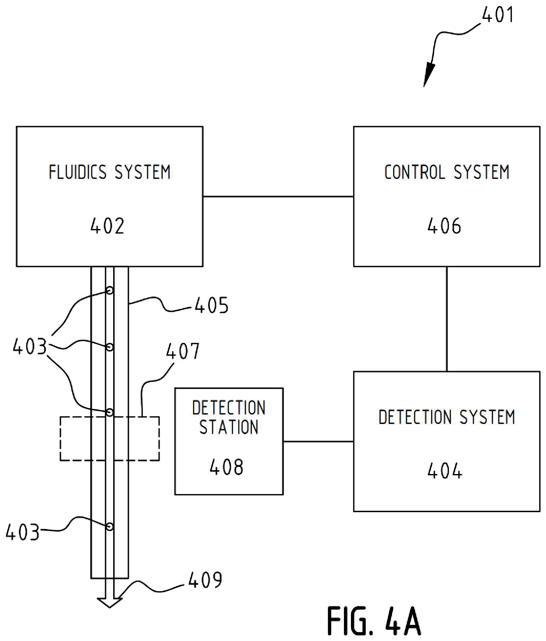

The system may be a particle analyzer where the particle analysis system 401 (FIG. 4A) can be used to analyze and characterize particles, with or without physically sorting the particles into collection vessels. FIG. 4A shows a functional block diagram of a particle analysis system for computational based sample analysis and particle characterization. The particle analysis system 401 may be a flow system. The particle analysis system 401 shown in FIG. 4A can be configured to perform, in whole or in part, the methods described herein such as. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, include detecting light or one or more other properties of the particles 403 as they pass through a monitored area 407. In FIG. 4A, one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 306. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

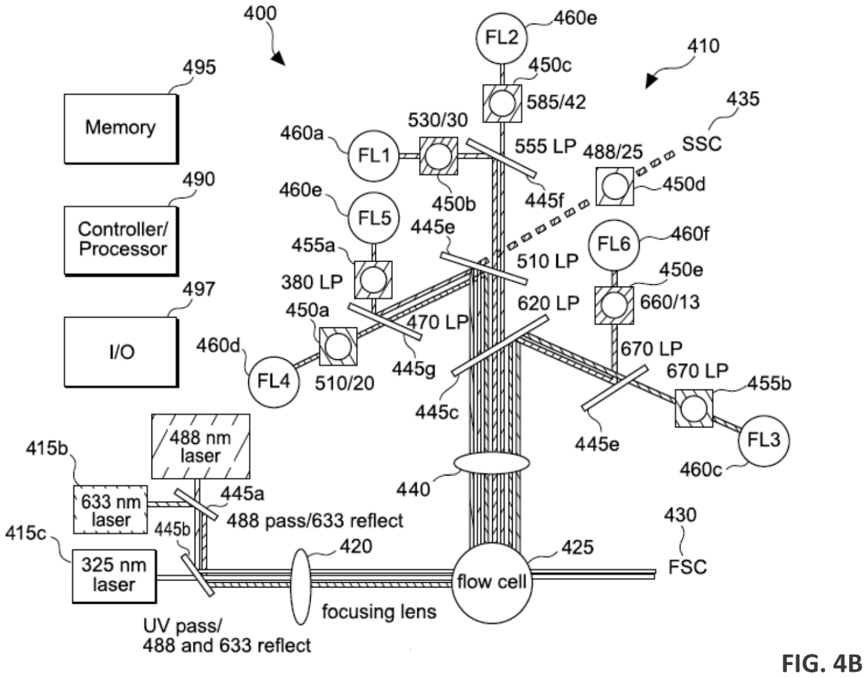

FIG. 4B shows a system 400 for flow cytometry in accordance with the present invention. The system 400 may include a flow cytometer 410, a controller/processor 490 and a memory 495. The flow cytometer 410 includes one or more excitation lasers 415a-415c, a focusing lens 420, a flow chamber 425, a forward scatter detector 430, a side scatter detector 435, a fluorescence collection lens 440, one or more beam splitters 445a-445g, one or more bandpass filters 450a-450e, one or more longpass ("LP") filters 455a-455b, and one or more fluorescent detectors 460a-460f.

The excitation lasers 115a-c emit light in the form of a laser beam. The wavelengths of the laser beams emitted from excitation lasers 415a-415c are 488 nm, 633 nm, and 325 nm, respectively, in the example system of FIG. 4B. The laser beams are first directed through one or more of beam splitters 445a and 445b. Beam splitter 445a transmits light at 488 nm and reflects light at 633 nm. Beam splitter 445b transmits UV light (light with a wavelength in the range of 10 to 400 nm) and reflects light at 488 nm and 633 nm.

The laser beams are then directed to a focusing lens 420, which focuses the beams onto the portion of a fluid stream where particles of a sample are located, within the flow chamber 425. The flow chamber is part of a fluidics system which directs particles, typically one at a time, in a stream to the focused laser beam for interrogation. The flow chamber can comprise a flow cell in a benchtop cytometer or a nozzle tip in a stream-in-air cytometer.

The light from the laser beam(s) interacts with the particles in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more of the forward scatter detector 430, the side scatter detector 435, and the one or more fluorescent detectors 460a-460f through one or more of the beam splitters 445a-445g, the bandpass filters 450a-450e, the longpass filters 455a-455b, and the fluorescence collection lens 440.

The fluorescence collection lens 440 collects light emitted from the particle- laser beam interaction and routes that light towards one or more beam splitters and filters. Bandpass filters, such as bandpass filters 450a-450e, allow a narrow range of wavelengths to pass through the filter. For example, bandpass filter 450a is a 510/20 filter. The first number represents the center of a spectral band. The second number provides a range of the spectral band. Thus, a 510/20 filter extends 10 nm on each side of the center of the spectral band, or from 500 nm to 520 nm. Shortpass filters transmit wavelengths of light equal to or shorter than a specified wavelength. Longpass filters, such as longpass filters 455a-455b, transmit wavelengths of light equal to or longer than a specified wavelength of light. For example, longpass filter 455a, which is a 670 nm longpass filter, transmits light equal to or longer than 670 nm. Filters are often selected to optimize the specificity of a detector for a particular fluorescent dye. The filters can be configured so that the spectral band of light transmitted to the detector is close to the emission peak of a fluorescent dye.

Beam splitters direct light of different wavelengths in different directions. Beam splitters can be characterized by filter properties such as shortpass and longpass. For example, beam splitter 445g is a 620 SP beam splitter, meaning that the beam splitter 445g transmits wavelengths of light that are 620 nm or shorter and reflects wavelengths of light that are longer than 620 nm in a different direction. The beam splitters 445a-445g can comprise optical mirrors, such as dichroic mirrors.

The forward scatter detector 430 is positioned slightly off axis from the direct beam through the flow cell and is configured to detect diffracted light, the excitation light that travels through or around the particle in mostly a forward direction. The intensity of the light detected by the forward scatter detector is dependent on the overall size of the particle. The forward scatter detector can include a photodiode. The side scatter detector 435 is configured to detect refracted and reflected light from the surfaces and internal structures of the particle, and tends to increase with increasing particle complexity of structure. The fluorescence emissions from fluorescent molecules associated with the particle can be detected by the one or more fluorescent detectors 460a-460f. The side scatter detector 435 and fluorescent detectors can include photomultiplier tubes. The signals detected at the forward scatter detector 430, the side scatter detector 435 and the fluorescent detectors can be converted to electronic signals (voltages) by the detectors. This data can provide information about the sample.

One of skill in the art will recognize that a flow cytometer in accordance with the present invention is not limited to the flow cytometer depicted in FIG. 4B, but can include any flow cytometer known in the art. For example, a flow cytometer may have any number of lasers, beam splitters, filters, and detectors at various wavelengths and in various different configurations.

In operation, cytometer operation is controlled by a controller/processor 490, and the measurement data from the detectors can be stored in the memory 495 and processed by the controller/processor 490. Although not shown explicitly, the controller/processor 190 is coupled to the detectors to receive the output signals therefrom, and may also be coupled to electrical and electromechanical components of the flow cytometer 400 to control the lasers, fluid flow parameters, and the like. Input/output (I/O) capabilities 497 may be provided also in the system. The memory 495, controller/processor 490, and I/O 497 may be entirely provided as an integral part of the flow cytometer 410. A display may also form part of the I/O capabilities 497 for presenting experimental data to users of the cytometer 400. Alternatively, some or all of the memory 495 and controller/processor 490 and I/O capabilities may be part of one or more external devices such as a general purpose computer. Some or all of the memory 495 and controller/processor 490 can be in wireless or wired communication with the cytometer 410. The controller/processor 490 in conjunction with the memory 495 and the I/O 497 can be configured to perform various functions related to the preparation and analysis of a flow cytometer experiment.

The system illustrated in FIG. 4B includes six different detectors that detect fluorescent light in six different wavelength bands (which may be referred to herein as a "filter window" for a given detector) as defined by the configuration of filters and/or splitters in the beam path from the flow cell 425 to each detector. Different fluorescent molecules used for a flow cytometer experiment will emit light in their own characteristic wavelength bands. The particular fluorescent labels used for an experiment and their associated fluorescent emission bands may be selected to generally coincide with the filter windows of the detectors. However, as more detectors are provided, and more labels are utilized, perfect correspondence between filter windows and fluorescent emission spectra is not possible. It is generally true that although the peak of the emission spectra of a particular fluorescent molecule may lie within the filter window of one particular detector, some of the emission spectra of that label will also overlap the filter windows of one or more other detectors. This may be referred to as spillover. The I/O 497 can be configured to receive data regarding a flow cytometer experiment having a panel of fluorescent labels and a plurality of cell populations having a plurality of markers, each cell population having a subset of the plurality of markers. The I/O 497 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 495. The controller/processor 490 can be configured to evaluate one or more assignments of labels to markers.

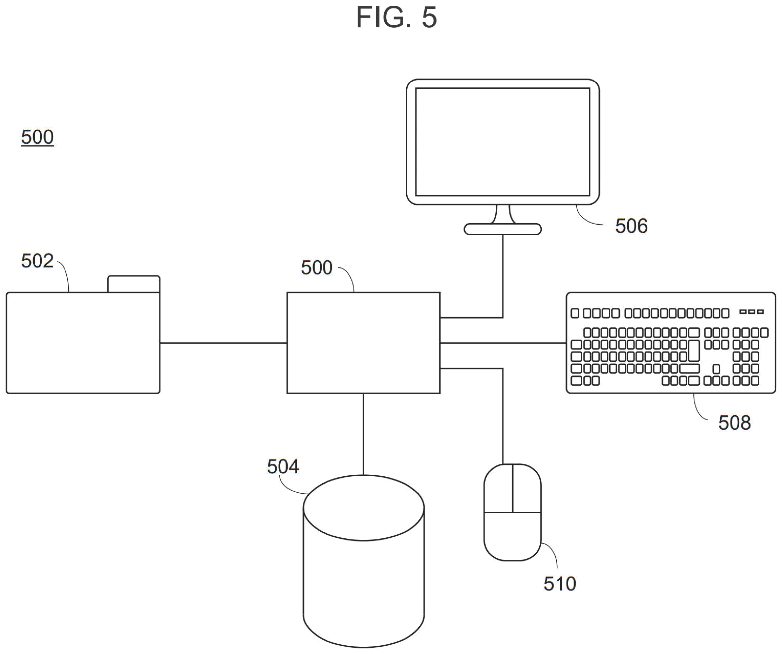

FIG. 5 shows a functional block diagram for one example of a particle analyzer control system, such as an analytics controller 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. The gate can be a logical combination of one or more graphical regions of interest drawn upon a single parameter histogram or bivariate plot. The display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). The first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in FIG. 5, the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

The analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

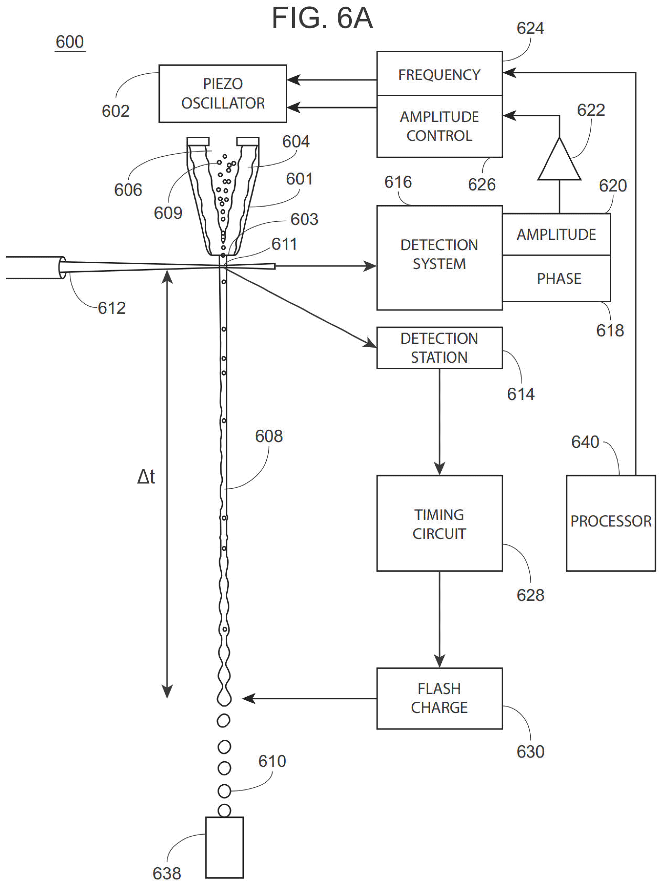

FIG. 6A is a schematic drawing of a particle sorter system 600 (e.g., the particle analyzer or sorting system 502) in accordance with the disclosure. The particle sorter system 600 may be a cell sorter system. As shown in FIG. 6A, a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in FIG. 6A, the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

Sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

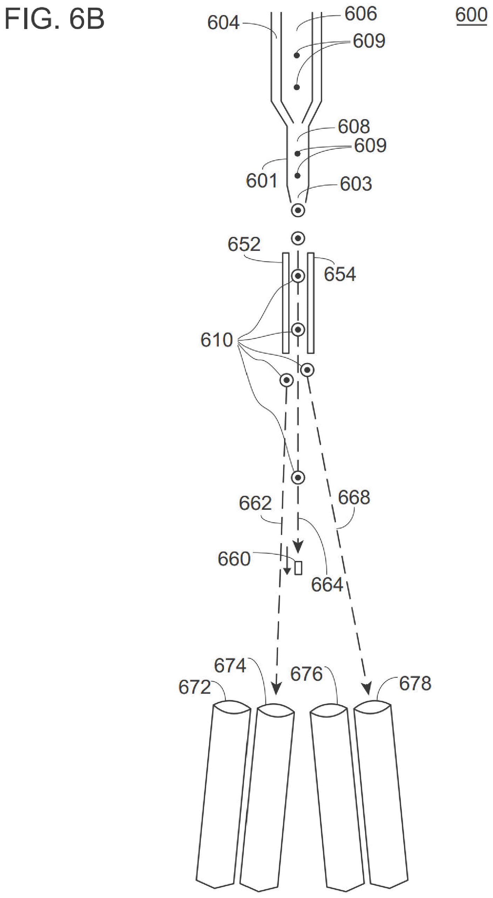

FIG. 6B is a schematic drawing of a particle sorter system, in accordance with the disclosure. The particle sorter system 600 shown in FIG. 6B, includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in FIG. 6B, the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations shown in FIG. 6B include the BD FACSAria^{™} line of flow cytometers commercially provided by Becton, Dickinson and Company (Franklin Lakes, NJ).

### METHODS FOR CLASSIFYING SINGLE CELLS IN A SAMPLE IN A FLOW STREAM

Aspects of the present disclosure also include a method for classifying cells (e.g., single cells) of a sample in a flow stream such as from biological parameters determined from feature vectors. Methods according to the disclosure include receiving two or more data sets, where each of the two or more data sets is associated with one of a plurality of data modes, applying an algorithm to convert each of the two or more data sets into a feature vector based on the associated data mode, receiving a classification task regarding the two or more data sets and applying one or more of a plurality of classification models to the feature vector based on the received classification task to determine a class. The method may further include irradiating with a light source a sample having cells in a flow stream and measuring light with a light detection system having a photodetector from the irradiated cells.

In practicing the method according to the disclosure, light from a sample (e.g., a sample is irradiated with a light source) having cells in a flow stream may be measured with a light detection system having a photodetector. The light source may be a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where the method includes irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

The method may include irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In the disclosure, the method may include irradiating the sample with one or more lasers. As discussed above, the type and number of lasers will vary depending on the sample as well as desired light collected and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. The method may include irradiating the flow stream with a dye laser, such as a stilbene, coumarin or rhodamine laser. The method may include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. The method may include irradiating the flow stream with a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The sample may be irradiated with one or more of the above-mentioned light sources, such as 2 or more light sources, such as 3 or more light sources, such as 4 or more light sources, such as 5 or more light sources and including 10 or more light sources. The light source may include any combination of types of light sources. For example, the method may include irradiating the sample in the flow stream with an array of lasers, such as an array having one or more gas lasers, one or more dye lasers and one or more solid-state lasers.

The sample may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the sample may be irradiated with wavelengths from 200 nm to 900 nm. Where the light source includes a plurality of narrow band light sources, the sample may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. The narrow band light source may include one or more lasers (such as a laser array) and the sample is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample may be irradiated with the light sources simultaneously or sequentially, or a combination thereof. For example, the sample may be simultaneously irradiated with each of the light sources. The flow stream may be sequentially irradiated with each of the light sources. Where more than one light source is employed to irradiate the sample sequentially, the time each light source irradiates the sample may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample with the light source (e.g. laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. Where sample is sequentially irradiated with two or more light sources, the duration sample is irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In the disclosure, the time period between irradiation by each light source is 10 microseconds. Where the sample is sequentially irradiated by more than two (i.e., 3 or more) light sources, the delay between irradiation by each light source may be the same or different.

The sample may be irradiated continuously or in discrete intervals. The method may include irradiating the sample in the sample with the light source continuously. The sample in may be irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

The method may include irradiating the cell sample with frequency-modulated beams of light. The method may include irradiating the sample with two or more beams of frequency shifted light. As described above, a light beam generator component may be employed having a laser and an acousto-optic device for frequency shifting the laser light. The method may include irradiating the acousto-optic device with the laser. Depending on the desired wavelengths of light produced in the output laser beam (e.g., for use in irradiating a sample in a flow stream), the laser may have a specific wavelength that varies from 200 nm to 1500 nm, such as from 250 nm to 1250 nm, such as from 300 nm to 1000 nm, such as from 350 nm to 900 nm and including from 400 nm to 800 nm. The acousto-optic device may be irradiated with one or more lasers, such as 2 or more lasers, such as 3 or more lasers, such as 4 or more lasers, such as 5 or more lasers and including 10 or more lasers. The lasers may include any combination of types of lasers. For example, , the method may include irradiating the acousto-optic device with an array of lasers, such as an array having one or more gas lasers, one or more dye lasers and one or more solid-state lasers.

Where more than one laser is employed, the acousto-optic device may be irradiated with the lasers simultaneously or sequentially, or a combination thereof. For example, the acousto-optic device may be simultaneously irradiated with each of the lasers. The acousto-optic device may be sequentially irradiated with each of the lasers. Where more than one laser is employed to irradiate the acousto-optic device sequentially, the time each laser irradiates the acousto-optic device may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the acousto-optic device with the laser for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. Where the acousto-optic device is sequentially irradiated with two or more lasers, the duration the acousto-optic device is irradiated by each laser may be the same or different.

The time period between irradiation by each laser may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In the disclosure, the time period between irradiation by each laser is 10 microseconds. Where the acousto-optic device is sequentially irradiated by more than two (i.e., 3 or more) lasers, the delay between irradiation by each laser may be the same or different.

The acousto-optic device may be irradiated continuously or in discrete intervals. The method may include irradiating the acousto-optic device with the laser continuously. The acousto-optic device may be irradiated with the laser in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the laser, the acousto-optic device may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

The method may include applying radiofrequency drive signals to the acousto-optic device to generate angularly deflected laser beams. Two or more radiofrequency drive signals may be applied to the acousto-optic device to generate an output laser beam with the desired number of angularly deflected laser beams, such as 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including 100 or more radiofrequency drive signals.

The angularly deflected laser beams produced by the radiofrequency drive signals each have an intensity based on the amplitude of the applied radiofrequency drive signal. The method may include applying radiofrequency drive signals having amplitudes sufficient to produce angularly deflected laser beams with a desired intensity. Each applied radiofrequency drive signal independently may have an amplitude from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal may have a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

The angularly deflected laser beams in the output laser beam may be spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. The angularly deflected laser beams may overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

The sample may be irradiated in the flow stream with a plurality of beams of frequency-shifted light and images of the cell mitochondria in the flow stream are generated such as described in Diebold, et al. Nature Photonics Vol. 7(10); 806-810 (2013), as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894.

Light from irradiated cells in the sample is conveyed to a light detection system as described above and measured by the plurality of photodetectors. The method may include measuring the collected light over a range of wavelengths (e.g., 200 nm - 1000 nm). For example, the method may include collecting spectra of light over one or more of the wavelength ranges of 200 nm - 1000 nm. The method may include measuring collected light at one or more specific wavelengths. For example, the collected light may be measured at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof.

The collected light may be measured continuously or in discrete intervals. The method may include taking measurements of the light continuously. The light may be measured in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the collected light may be taken one or more times during the subject methods, such as 2 or more times, such as 3 or more times, such as 5 or more times and including 10 or more times. In the disclosure, light from the sample is measured 2 or more times, whereby the data may be averaged.

Light from the cells in the sample may be measured at one or more wavelengths of, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring the collected light at 400 or more different wavelengths.

The method may include further adjusting the light from the sample before detecting the light. For example, the light from the sample source may be passed through one or more lenses, mirrors, pinholes, slits, gratings, light refractors, and any combination thereof. The collected light may be passed through one or more focusing lenses, such as to reduce the profile of the light. The emitted light from the sample may be passed through one or more collimators to reduce light beam divergence.

Image data may be generated from the measured light. The generated data may be image data. The image data may include dark field images of the cell. In some instances, the image data includes light field images of the cell. The image data may include fluorescence-labelled images of the cell. The image data may include label-free images of the cell. The image data may include autofluorescence image data. The image data may include 1 or more images of the cells, such as 2 or more, such as 3 or more, such as 4 or more, such as 5 or more, such as 10 or more, such as 15 or more, such as 25 or more and including 50 or more images of the cells. The image data may include 2 or more different types of images (e.g., fluorescence-labelled images, autofluorescence images, dark-field images, etc.), such as 3 or more different types of images, such as 4 or more different types of images and including 5 or more different types of images. The method may include converting one type of image to another, such as where images generated in a light loss photodetector channel (e.g., a brightfield image) are inverted to create dark field images.

The method may include generating the image from detected light absorption, detected light scatter, detected light emission or any combination thereof. The method may include generating the image from light absorption detected from the sample, such as from a brightfield light detector. The method may include generating the image from light scatter detected from the sample, such as from a side scatter detector, a forward scatter detector or a combination of a side scatter detector and forward scatter detector. The method may include generating the image from emitted light from the sample. The method may include generating the image from a combination of detected light absorption and detected light scatter.

The method may include receiving two or more data sets associated with the plurality of data modes. The data mode may be an image data mode. The data mode may be a sequence data mode (e.g., waveforms). The data mode may be a tabular data mode.

The plurality of data modes may include an image data mode. The method may include generating a single image for each cell in the sample from each form of detected light. The method may include generating a plurality of images for each cell, such as 2 or more, such as 3 or more, such as 5 or more, such as 10 or more and including 25 or more images for each cell. For example, the method may include generating a first image of the cell from fluorescence detected from the labelled cell; instructions for generating a second image of the cell from detected light absorption and instructions for generating a third image from detected light scatter. The method may include generating two or more images from each form of detected light, such as 3 or more, such as 4 or more, such as 5 or more and including 10 or more images or a combination thereof.

The algorithm may be a rule-based image processing algorithm. The algorithm may include a neural network. The method may include inverting a lightloss channel of the data set associated with the image data mode, scaling a pixel value of each channel of the data set associated with the image data mode to a zero mean, scaling a pixel value of each channel of the data set associated with the image data mode to a unit standard deviation or a combination thereof.

The method may include generating image data, such as digital waveforms generated in one or more photodetector channels. The method may include calculating image parameters directly from the waveforms. The method may include calculating image parameters from the image data, the generated images or a combination thereof. The method may include determining the cell parameters only from calculated image parameters (e.g., radial moment, eccentricity, etc.) The method may include determining the cell parameters only from the images of the particles and not from another data source, such as for example data signal waveforms. The method may include determining the cell parameters using a combination of a generated image of the particles and data signal waveforms generated in response to measured light from irradiated particles.

The method may include generating frequency-encoded data (e.g., frequency-encoded spatial data) from the measured light from the cells of the sample in the flow stream. The method may include generating one or more images from the frequency-encoded data. The frequency-encoded data may be generated in one or more detection channels, such as 2 or more, such as 3 or more, such as 4 or more, such as 5 or more, such as 6 or more and including 8 or more detection channels. The frequency-encoded data may includes data components taken (or derived) from light from different detectors, such as detected light absorption or detected light scatter. The method may include phase-correcting the frequency-encoded data. The method may include generating phase-corrected images of the cells by performing a transform on the frequency-encoded data. The method may include phase correcting the frequency-encoded data by performing a Fourier transform (FT) of the frequency-encoded data. The method may include phase correcting the frequency-encoded data by performing a discrete Fourier transform (DFT) of the frequency-encoded data. The method may include phase correcting the frequency-encoded data by performing a short time Fourier transform (STFT) of the frequency-encoded data. The method may include performing a transform of the frequency encoded data without performing any mathematical imaginary computations (i.e., only performing computations for mathematical real computations of the transform) to generate an image from the frequency-encoded data.

The plurality of data modes may include a sequence data mode. The sequence data may include waveforms generated in one or more different photodetector channels. The sequence data may include raw waveforms. The sequence data may include raw image data in the form of the raw waveforms generated in the imaging photodetector channels. The sequence data may include raw waveforms and the image data is generated in real-time from the raw waveforms.

The plurality of data modes may include a tabular data mode. The tabular data may be applied to the neural network as flow cytometric data files of the tabular data. The tabular data may be spectral tabular data generated in one or more fluorescence photodetector channels. The spectral tabular data may be generated from fluorescence measured at 1 or more spectral wavelength ranges of light, such as 2 or more, such as 3 or more, such as 4 or more, such as 5 or more, such as 6 or more, such as 7 or more, such as 8 or more, such 9 or more, such as 10 or more, such as 12 or more, such as 16 or more and including 24 or more different spectral wavelength ranges of light. The spectral tabular data may be uncompensated or unprocessed spectral data. The spectral tabular data may be compensated or unmixed spectra data. The spectral tabular data can be unmixed by spectrally resolving the light from each fluorophore in the sample (e.g., using a weighted least squares algorithm or a generalized least squares algorithm). The overlap between each different fluorophore may be determined and the contribution of each fluorophore to the overlapping fluorescence is calculated. The spectral tabular data may be spectrally resolving by calculating a spectral unmixing matrix for the fluorescence spectra for each of the plurality of fluorophores having overlapping fluorescence in the sample detected by the light detection system. For example, spectral unmixing of the spectral tabular data may include a Moore-Penrose inverse or pseudoinverse of the spectral matrix. The algorithm for spectral unmixing may be characterized by a Cholesky decomposition of the unmixing matrix. Unmixed spectral tabular data may be calibrated using a calibration scaling factor and the fluorophore abundance.

The spectral tabular data from each fluorophore (e.g., calculating a spectral unmixing matrix for each fluorophore) may be used to estimate the abundance of each fluorophore in the sample. In the disclosure, the abundance of each fluorophore associated with a target particle may be determined. In the disclosure, the spectral tabular data are spectrally unmixed by unmixing algorithms such as those described in United States Patent No. 11,009,400, United States Patent Publication No. 2024/0192122 filed on December 12, 2023 and United States Patent Application No. 18/986,295 filed on December 18, 2024.

The tabular data may include scattering tabular data. The scattering tabular data may be generated from measured forward scatter light from the sample (i.e., from photodetector signals generated in the forward scatter photodetector channel, FSC). The scattering tabular data may be generated from measured side scatter light from the sample (i.e., from photodetector signals generated in the side scatter photodetector channel, SSC).

The method may include applying an algorithm to convert each of the two or more data sets into feature vectors. Any convenient machine learning algorithm may be implemented to convert the generated image data, sequence data and tabular data into feature vectors where machine learning algorithms of interest can include, but are not limited to a linear regression algorithm, a logistic regression algorithm, a Naïve Bayes algorithm, a k-nearest neighbor (kNN) algorithm, a Random forest algorithm, decision tree algorithm, a support vector machine algorithm, a gradient boosting algorithm and a clustering algorithm. In the disclosure, the method may include applying a neural network, such as an artificial neural network, a convolutional neural network or a recurrent neural network. The method may include implementing a python script. In some instances, methods include applying artificial neural networks (e.g., convolutional neural networks, etc.), Bayesian statistics, learning automata, Hidden Markov Modeling, linear classifiers, quadratic classifiers, association rule learning, and/or the like as described above.

The method may include applying a neural network to convert the generated data into the feature vectors. The , the neural network may include a feature engineering layer for generating the feature vectors from the image data, sequence data and the tabular data. The feature engineering layer may convert image data into image parameters of the cell. The feature vector may be a quantitative image parameter. The feature vector may be a radial moment of the cell. the feature vector may be a size of the cell. The feature vector may be diffusivity of the cell. The feature vector may be eccentricity of the cell. The feature vector may be a degree of punctateness of the cell. The feature vector may be the shape of the cell. The feature vector may be one or more morphological features of the cell.

The feature engineering layer may have algorithm for extracting sequence data features from photodetector waveforms. The algorithm may include a sequence learning machine model. The feature engineering layer may apply a machine learning model that extracts features from the waveforms.

The feature engineering layer may have algorithm for spectral unmixing spectral tabular data. The feature engineering layer may have algorithm for calculating an abundance of a biomarker molecule (e.g., a surface biomarker moiety). The feature engineering layer may have algorithm for calculating fluorophore abundance. The feature engineering layer may have algorithm for calculating physical measurements of the cell based on scattered light tabular data. For example, the feature engineering layer may apply a machine learning model which translates raw scatter channel tabular data into a measurement unit of the cell, such as the size of the cell or cellular components in nanometers.

The method may include applying a machine learning algorithm (e.g., a neural network) to determine one or more biological parameters of the cell based on the feature vectors. Depending on the application, different analysis models can be applied to extract biological insights of the cells from the feature vectors.

The analysis model may be an end-to-end model. The end-to-end model may be designed to identify predefined cellular phenotypes. The end-to-end model may be a gating hierarchy or a classification model such as a single classification model or multi-layer classification model (single or multi-layer perceptrons), random forest classifier or a support vector machine. The analysis model may be an exploratory model, such as one which can discover novel cell populations. The exploratory model applied may be a dimensionality reduction algorithm such as uniform manifold approximation and projection (UMAP), t-distributed stochastic neighbor embedding (TSNE) and principal component analysis (PCA).

The analysis model can select all or a subset of feature vectors based on prior knowledge of which features are relevant to the biological parameters of interest. For example, as described in greater detail below a viability classification task can be developed to identify live cells based on the combination of brightfield and darkfield image data from the cell. The analysis model may utilize feature vectors from the light loss, side scatter and forward scatter image data. A TBNK classification task can be designed to classify cells into T-cells, B-cells and natural killer (NK) cells using image data. The analysis model may apply label-free image data and autofluorescence image data to determine biological parameters from the feature vectors.

The neural network may include a machine-learning encoder layer. The encoder layer may be a rule-based image processing pipeline. The encoder layer may include an image encoder. The image encoder may have an image recognition model architecture. The image encoder may have an encoder model architecture such as RestNet34, ShuffletNet V2, EfficientNet V2-S, Inception V3 and combinations thereof. The method may include training the encoder layer using a supervised approach with a weighted cross-entropy loss function. The method may include reconstructing images from data waveforms in real time. The trained encoder layer may be validated based on evaluated feature quality. The evaluated feature quality may be determined using a metric such as precision, recall and F-1 score.

The method may include applying the neural network to the data to classify the cell based on one or more of the determined feature vectors. The method may include applying a dimensionality reduction algorithm to the generated data. The method may include applying a dimensionality reduction algorithm to a high-dimension feature vector. The dimensionality reduction algorithm may be selected from uniform manifold approximation and projection (UMAP), t-distributed stochastic neighbor embedding (t-SNE), principal component analysis (PCA) and combinations thereof.

The method may include applying a classification task to the two or more data sets and apply one or more of a plurality of classification models to the feature vector based on the received classification task to determine a class. The classification task may be a viability classification task. The classification task may include a viability classification task and the class includes a live class, a dead class, or an apoptotic class. The memory may include instructions for classifying the data with a cell-type classification task. The cell-type classification task may classifycells into T-cells, B-cells and natural killer (NK)-cells. The method may include applying a classification task that includes singlets classification and the class includes a singlets class, an attached doublets class, a separated doublets class, a triplets class, or a debris class. The classification task may include a whole blood classification task and the whole blood classification includes a granulocyte class, a monocyte class, or a lymphocyte class. The classification task may include a T-cell activation classification task and the class includes an activated class, or a non-activated class.

The neural network may include a learning algorithm configured to train and optimize cell classification. Different datasets may be combined and shuffled, ensuring that each training batch contained samples from various datasets. The datasets may be divided into three different sets: 1) for training; 2) for validation; and 3) for testing. The training data set may include from 40% to 80% of the data, such as from 50% to 75% and including 70% of the data for training. The validation data set may include from 10% to 30% of the data, such as from 15% to 25% and including 30% of the data for validation. The testing data set may include from 5% to 20% of the data, such as from 7.5% to 15% and including 10% of the data for testing.

One or more of the image data mode, sequence data mode and tabular data mode may be processed in real time during application of the training algorithm. Images may be reconstructed from raw data waveforms in real time during application of the training algorithm. The method may include transforming the image before being applied to the neural network. Data from the light loss channel may be inverted to create dark field images. All photodetector channels may be zero-padded. The pixel values of each photodetector channel may be scaled to have zero mean and unit standard deviation.

The training algorithm may include using a supervised approach with a weighted cross-entropy loss function. The weights may be calculated as the product of class weights and task weights, where class weights correspond to the class abundance in a task and task weights correspond to the task abundance across all datasets. An Adam optimizer may be employed with a predetermined learning rate and no weight decay. The predetermined learning rate may range from 1e⁻¹ to 1e⁻⁵, such as from 1e⁻² to 1e⁻⁴ and including a learning rate of 1e⁻³. The learning rate may have no weight decay. The learning rate may be reduced by a predetermined factor if validation loss remains unchanged, such as if validation loss remains unchanged for 1 epoch or more, such as 2 epochs or more, such as 3 epochs or more, such as 5 epochs or more, such as 10 epochs or more, such as 15 epochs or more, such as 20 epochs or 25 epochs or more and including for 50 epochs or more. The learning rate may be reduced by a factor of 2 or more if validation loss remains unchanged, such as by a factor of 3 or more, such as 4 or more, such as 5 or more, such as 10 or more and including by a factor of 20 or more. The learning rate may be reduced by a factor of 10 if the validation loss remains unchanged for 10 epochs. The batch size for training may vary, having a batch size of 64 or more, such as 128 or more, such as 256 or more and including 512 or more. The batch size may be 128, or may be 512.

The performance of the algorithm may be evaluated. The trained model's performance may be assessed using the validation or test dataset. To evaluate feature quality, a dimensionality reduction may be applied to a high-dimensional feature vector. Applying the dimensionality reduction to a high-dimensional feature vector may provide for examination of how known populations are separated in low-dimensional space. The performance of the algorithm may be measured using one or more of precision, recall and F1 scores for each class. A receiver-operating characteristic curve may be generated for each class. Area under the curve (AUC) may be evaluated to assess the performance of the feature vector algorithm.

The method may include determining one or more sorting gates for the classified cells of the sample as described above. The term "gate" is used herein in its conventional sense to refer to a classifier boundary identifying a subset of data of interest. A gate can bound a group of events of particular interest. In addition, "gating" may refer to the process of classifying the data using a defined gate for a given set of data, where the gate can be one or more regions of interest combined with Boolean logic. A gate may identify particles exhibiting the same image parameters. Examples of methods for gating have been described in, for example, U.S. Pat. Nos. 4,845,653; 5,627,040; 5,739,000; 5,795,727; 5,962,238; 6,014,904; 6,944,338; and 8,990,047. The gate may bound a particle population cluster from one or more different samples that has previously been determined (e.g., by a user), to correspond to properties of interest.

The method may include displaying the gating strategy on the graphical user interface. For example, the analysis algorithm may be one or more of a spectral compensation matrix, a clustering algorithm and a t-Distributed Stochastic Neighbor Embedding (t-SNE) algorithm. The analysis algorithm may be applied to the particle population cluster by dragging an icon of the analysis algorithm onto the particle population cluster. The particle population cluster may be selected and the analysis algorithm is applied by selecting from a drop-down menu. The analysis algorithm may be a spectral unmixing algorithm, such as described in U.S. Patent No. 11,009,400 and International Patent Application No. PCT/US2021/46741 filed on August 19, 2021. The gating strategy may be determined using computational sorting algorithms such as described with in U.S. Patent No. 11,513,054. The sorting gates may be determined using computer software such as HyperFinder (e.g., as described in Bonavia, et al. Frontiers in Immunology 2022; 13: 1007016) and Computational Sorting with HyperFinder, FlowJo Software and BD FACSDiva Software (Becton Dickinson, 2021. In the disclosure, the gating strategy is developed on a separate computational system (e.g., a different computer system or network) and communicated to a flow cytometer for implementing the gating strategy, such as for example using a particle sorter (e.g, having a sort decision module) of the flow cytometer.

In the disclosure, the method may include sorting one or more of the cells of the sample. For example, the method may include sorting 2 or more components of the sample, such as 3 or more components, such as 4 or more components, such as 5 or more components, such as 10 or more components, such as 15 or more components and including sorting 25 or more components of the sample.

In sorting particles, the method includes data acquisition, analysis and recording, such as with a computer, where multiple data channels record data from each detector used in obtaining the overlapping spectra of the plurality of fluorophores associated with the particle. Analysis may include spectrally resolving light (e.g., by calculating the spectral unmixing matrix) from the plurality of fluorophores having overlapping spectra that are associated with the particle and identifying the particle based on the estimated abundance of each fluorophore associated with the particle. This analysis may be conveyed to a sorting system which is configured to generate a set of digitized parameters based on the particle classification.

The method for sorting components of sample include sorting cells of the sample with a particle sorting module having deflector plates, such as described in U.S. Patent Publication No. 2017/0299493, filed on March 28, 2017. In the disclosure, cells of the sample are sorted using a sort decision module having a plurality of sort decision units, such as those described in U.S. Patent Publication No. 2020/0256781. The subject system may include a particle sorting module having deflector plates, such as described in U.S. Patent Publication No. 2017/0299493, filed on March 28, 2017.

### NON-TRANSITORY COMPUTER-READABLE STORAGE MEDIA

The present disclosure further includes non-transitory computer readable storage media having instructions for practicing the subject methods. Computer readable storage media may be employed on one or more computers for complete automation or partial automation of a system for practicing methods described herein. In the disclosure, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Python, Java, Java Script, C, C#, C++, Go, R, Swift, PHP, as well as many others.

Non-transitory computer readable storage medium having instructions with algorithm are also provided. Non-transitory computer readable storage medium according to the disclosure has algorithm for receiving two or more data sets, where each of the two or more data sets is associated with one of a plurality of data modes, algorithm for applying an algorithm to convert each of the two or more data sets into a feature vector based on the associated data mode, algorithm for receiving a classification task regarding the two or more data sets and algorithm for applying one or more of a plurality of classification models to the feature vector based on the received classification task to determine a class. The non-transitory computer readable storage medium may include algorithm for irradiating with a light source a sample having cells in a flow stream and algorithm for measuring light with a light detection system having a photodetector from the irradiated cells.

The plurality of data modes may include an image data mode. The algorithm may be a rule-based image processing algorithm. The algorithm may include a neural network. The memory may include instructions to invert a lightloss channel of the data set associated with the image data mode, scale a pixel value of each channel of the data set associated with the image data mode to a zero mean, scale a pixel value of each channel of the data set associated with the image data mode to a unit standard deviation or a combination thereof. The algorithm may include a sequence learning machine model. The algorithm may include a compensation model, a spectral unmixing model or a combination thereof. The algorithm may include a calibration model.

The classification task may include a singlets classification task, a viability classification task, a whole blood classification task, a T-cell activation classification task, or any combination thereof. The classification task may be a singlets classification task and the class includes a singlets class, an attached doublets class, a separated doublets class, a triplets class, or a debris class. The classification task may include a viability classification task and the class includes a live class, a dead class, or an apoptotic class. The classification task may include a whole blood classification task and the whole blood classification includes a granulocyte class, a monocyte class, or a lymphocyte class. The classification task may include a T-cell activation classification task and the class includes an activated class, or a non-activated class.

The plurality of classification models may include an end-to-end model. The end-to-end model may include a Uniform Manifold Approximation and Projection (UMAP) model, a T-distributed Stochastic Neighbor Embedding (TSNE) model, a Principal Component Analysis (PCA) model, or any combination thereof. The plurality of classification models may be trained by a supervised method. The plurality of classification models may be trained by a weight cross-entropy loss function.

The image data may include dark field images, light field images, fluorescence labelled images of the cell and combinations thereof. The image data may include label-free images of the cell. The image data may include autofluorescence image data. The sequence data may include photodetector waveforms. The sequence data may include raw image data in the form of raw waveforms. The image data may be generated from the raw waveforms in real-time. The tabular data may be spectral tabular data. The tabular data may be spectral data generated in response to different wavelengths of emitted light from the cells. The spectral tabular data may be compensated or unmixed spectral data. The tabular data may be scattered tabular data generated in response to scattered light from the irradiated cells.

The neural network may include a feature engineering layer for generating the feature vectors from the image data, the sequence data and the tabular data of the cells. The feature engineering layer may convert image data into image parameters of the cell. The image parameters may include one or more of size of the cell, diffusivity of the cell, eccentricity of the cell, degree of punctateness of the cell, shape of the cell, the cell morphology. The feature engineering layer may have algorithm for extracting sequence data features from photodetector waveforms. The feature engineering layer may have algorithm for spectral unmixing spectral tabular data. The feature engineering layer may have algorithm for calculating an abundance of a biomarker molecule (e.g., a surface biomarker moiety). The feature engineering layer may have algorithm for calculating fluorophore abundance. The feature engineering layer may have algorithm for calculating physical measurements of the cell based on scattered light tabular data.

The neural network may include a machine-learning encoder layer. The encoder layer may be a rule-based image processing pipeline. The encoder layer may include an image encoder. The image encoder may have an image recognition model architecture. The image encoder may have an encoder model architecture such as RestNet34, ShuffletNet V2, EfficientNet V2-S, Inception V3 and combinations thereof. The encoder layer may be trained using a supervised approach with a weighted cross-entropy loss function. The images may be reconstructed from data waveforms in real time. The trained encoder layer may be validated based on evaluated feature quality. The evaluated feature quality may be determined using a metric such as precision, recall and F-1 score.

The non-transitory computer readable storage medium may include algorithm to apply the neural network to the data to classify the cell based on one or more of the determined biological parameters. The non-transitory computer readable storage medium may include algorithm for applying a dimensionality reduction algorithm to the generated data. The non-transitory computer readable storage medium may include algorithm for applying a dimensionality reduction algorithm to a high-dimension feature vector. The dimensionality reduction algorithm may be selected from uniform manifold approximation and projection (UMAP), t-distributed stochastic neighbor embedding (t-SNE), principal component analysis (PCA) and combinations thereof. The non-transitory computer readable storage medium may include algorithm to classify the cells based on a gating hierarchy. The non-transitory computer readable storage medium may include algorithm to classify the cells with a classification model such as a single layer perceptron, multi-layer perceptron, random forest classifiers, support vector machines and combinations thereof. The non-transitory computer readable storage medium may include algorithm to classify the data with a viability classifier. The non-transitory computer readable storage medium may include algorithm to classify the data with a cell-type classifier. The cell-type classifier may classify cells into T-cells, B-cells and natural killer (NK)-cells. The non-transitory computer readable storage medium may include algorithm to classify the data with a singlet discrimination classifier. The non-transitory computer readable storage medium may include algorithm to classify the data with a whole blood classifier. The non-transitory computer readable storage medium may include algorithm to classify the data with an activation classifier.

The non-transitory computer readable storage medium may include algorithm for determining one or more sorting gates of the classified cells of the sample. The non-transitory computer readable storage medium may include algorithm for calculating one or more sorting gates that capture population clusters of target cells and exclude population clusters of non-target cells. The non-transitory computer readable storage medium may include algorithm for calculating sorting gates that maximize the inclusion yield of the population clusters of the target cells. The non-transitory computer readable storage medium may include algorithm for calculating sorting gates that maximize the exclusion of population clusters of non-target cells.

The non-transitory computer readable storage medium may include algorithm for sorting cells of the sample into a plurality of sample containers. The non-transitory computer readable storage medium may include algorithm for sorting cells based on the presence, the classification, or both, of the cell. The non-transitory computer readable storage medium may include algorithm for sorting cells based on the generated images of the cells. The non-transitory computer readable storage medium may include algorithm.

The non-transitory computer readable storage medium may be employed on one or more computer systems having a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as those mentioned above, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

### KITS

The present disclosure is also related to a kit where the kit includes one or more of the integrated circuits described herein. The kit may further include programming for the subject systems, such as in the form of a computer readable medium (e.g., flash drive, USB storage, compact disk, DVD, Blu-ray disk, etc.) or instructions for downloading the programming from an internet web protocol or cloud server. Kits may further include instructions for practicing the subject methods. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject system, method and computer system find use as an upstream assessment for cells such as for applications where cells having particular biological parameters may be used, such as in molecular biology assays (e.g., in gene expression analysis). The present disclosure provides for high quality and purity cells isolated from a heterogeneous sample. In addition, the subject system and method find use in a variety of applications where it is desirable to analyze and sort particle components in a sample in a fluid medium.The system and method described herein may find use in flow cytometry characterization of cell isolates. The present disclosure may find use where it is desirable to provide a flow cytometer with improved cell sorting accuracy, enhanced particle collection, particle charging efficiency, more accurate particle charging and enhanced particle deflection during cell sorting.

The present disclosure may also find use in applications where cells prepared from a biological sample may be desired for research, laboratory testing or for use in therapy. The subject method and device may facilitate obtaining individual cells prepared from a target fluidic or tissue biological sample. For example, the subject methods and systems facilitate obtaining particular cells from fluidic or tissue samples to be used as a research or diagnostic specimen. The method and device of the present disclosure may allow for separating and collecting cells from a biological sample (e.g., organ, tissue, tissue fragment, fluid) with enhanced efficiency and low cost as compared to traditional flow cytometry systems.

Although the foregoing invention has been described in some detail by way of illustration and example for purposes of clarity of understanding, it is readily apparent to those of ordinary skill in the art in light of the teachings of this invention that certain changes and modifications may be made thereto without departing from the scope of the appended claims.

Accordingly, the preceding merely illustrates the principles of the invention. It will be appreciated that those skilled in the art will be able to devise various arrangements which, although not explicitly described or shown herein, embody the principles of the invention and are included within its scope.
Furthermore, all examples and conditional language recited herein are principally intended to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.
The scope of the present invention, therefore, is not intended to be limited to the exemplary embodiments shown and described herein. Rather, the scope and spirit of present invention is embodied by the appended claims.

## Claims

1. A system comprising:
a light source configured to irradiate cells of a sample in a flow stream;
a light detection system comprising a photodetector to detect light from the irradiated cells;
a processor comprising memory operably coupled to the processor
wherein the memory comprises instructions stored thereon, which when executed by the processor, cause the processor to:
receive two or more data sets, wherein each of the two or more data sets is associated with one of a plurality of data modes;
apply an algorithm to convert each of the two or more data sets into a feature vector based on the associated data mode;
receive a classification task regarding the two or more data sets; and
apply one or more of a plurality of classification models to the feature vector based on the received classification task to determine a class.

2. The system according to claim 1 with one or more of the following:
- wherein the plurality of data modes comprises an image data mode, preferably wherein the memory comprises instructions to invert a lightloss channel of the data set associated with the image data mode; scale a pixel value of each channel of the data set associated with the image data mode to a zero mean;
scale a pixel value of each channel of the data set associated with the image data mode to a unit standard deviation; or
a combination thereof;
- wherein the algorithm comprises a rule-based image processing algorithm;
- wherein the algorithm comprises neural network.

3. The system according to claims 1 or 2, with one or more of the following:
- wherein the plurality of data modes comprises a waveform data mode;
- wherein the algorithm comprises a sequence learning machine model.
- wherein the plurality of data modes comprises a spectral data mode, preferably wherein the algorithm comprises a compensation model, a spectral unmixing model, or both;
- wherein the plurality of data modes comprises a scattering data mode;
- wherein the algorithm comprises a calibration model.

4. The system according to any one of claims 1-3, wherein the classification task comprises a singlets classification task, a viability classification task, a whole blood classification task, a T-cell activation classification task, or any combination thereof.

5. The system according to claim 4, with one of the following:
- wherein the classification task comprises the singlets classification task and wherein the class comprises a singlets class, an attached doublets class, a separated doublets class, a triplets class, or a debris class;
- wherein the classification task comprises the viability classification task and wherein the class comprises a live class, a dead class, or an apoptotic class;
- wherein the classification task comprises the whole blood classification task and wherein the class comprises a granulocyte class, a monocyte class, or a lymphocyte class;
- wherein the classification task comprises the T-cell activation classification task and wherein the class comprises an activated class, or a non-activated class.

6. The system according to any one of claims 1-5, wherein the plurality of classification models comprises an end-to-end model, preferably wherein the end-to-end model comprises a gating hierarchy, a single layer classifier, a multi-layer classifier, a random forest classifier, a support vector machine classifier, or any combination thereof.

7. The system according to any one of claims 1-5, wherein the plurality of classification models comprises an exploratory model, preferably
wherein the exploratory model comprises a Uniform Manifold Approximation and Projection (UMAP) model, a T-distributed Stochastic Neighbor Embedding (TSNE) model, a Principal Component Analysis (PCA) model, or any combination thereof, more preferably
wherein one or more of the plurality of classification models is trained by a supervised method, even more preferably
wherein one or more of the plurality of classification models is trained by a weighted cross-entropy loss function.

8. A method comprising:
receiving two or more data sets, wherein each of the two or more data sets is associated with one of a plurality of data modes;
applying an algorithm to convert each of the two or more data sets into a feature vector based on the associated data mode;
receiving a classification task regarding the two or more data sets; and
applying one or more of a plurality of classification models to the feature vector based on the received classification task to determine a class.

9. The method according to claim 8 with one or more of the following:
- wherein the plurality of data modes comprises an image data mode;
- wherein the algorithm comprises a rule-based image processing algorithm, preferably further comprising: inverting a lightloss channel of the data set associated with the image data mode;
scaling a pixel value of each channel of the data set associated with the image data mode to a zero mean;
scaling a pixel value of each channel of the data set associated with the image data mode to a unit standard deviation; or
any combination thereof;
- wherein the algorithm comprises neural network.
- wherein the plurality of data modes comprises a waveform data mode;
- wherein the algorithm comprises a sequence learning machine model;
- wherein the plurality of data modes comprises a spectral data mode, preferably wherein the algorithm comprises a compensation model, a spectral unmixing model, or both;
- wherein the plurality of data modes comprises a scattering data mode;
- wherein the algorithm comprises a calibration model.

10. The method according to any one of claims 8-9, wherein the classification task comprises a singlets classification task, a viability classification task, a whole blood classification task, a T-cell activation classification task, or any combination thereof.

11. The method according to claim 10 with one or more of the following:
- wherein the classification task comprises the singlets classification task and wherein the class comprises a singlets class, an attached doublets class, a separated doublets class, a triplets class, or a debris class;
- wherein the classification task comprises the viability classification task and wherein the class comprises a live class, a dead class, or an apoptotic class;
- wherein the classification task comprises the whole blood classification task and wherein the class comprises a granulocyte class, a monocyte class, or a lymphocyte class;
- wherein the classification task comprises the T-cell activation classification task and wherein the class comprises an activated class, or a non-activated class.

12. Use of the system according to any of the claims 1-7 in the method according to any one of claims 8-11.

13. A non-transitory computer readable storage medium comprising instructions stored thereon wherein the non-transitory computer readable storage medium comprises:
algorithm for receiving two or more data sets, wherein each of the two or more data sets is associated with one of a plurality of data modes;
algorithm for applying an algorithm to convert each of the two or more data sets into a feature vector based on the associated data mode;
algorithm for receiving a classification task regarding the two or more data sets; and
algorithm for applying one or more of a plurality of classification models to the feature vector based on the received classification task to determine a class.

14. The non-transitory computer readable storage medium according to claim 13, with one or more of the following:
wherein the plurality of data modes comprises an image data mode,
preferably wherein the memory comprises instructions to; invert a lightloss channel of the data set associated with the image data mode;scale a pixel value of each channel of the data set associated with the image data mode to a zero mean; scale a pixel value of each channel of the data set associated with the image data mode to a unit standard deviation; or a combination thereof;
- wherein the algorithm comprises a rule-based image processing algorithm.
- wherein the algorithm comprises neural network.
- wherein the plurality of data modes comprises a waveform data mode.
- wherein the algorithm comprises a sequence learning machine model.

15. The non-transitory computer readable storage medium according to claim 14 for use in a system according to any of the claims 1-7 or a method according to any of the claims 8-11.
